# EUROPÄISCHE PATENTSCHRIFT

(11) **EP 3 949 719 B1**
(45) Veröffentlichungstag und Bekanntmachung des Hinweises auf die Patenterteilung: **25.06.2025**
(21) Anmeldenummer: 21186838.5
(22) Anmeldetag: 21.07.2021
(51) Int. Cl.: A01F 15/14

(54) **DOPPELKNOTER UND BALLENPRESSE MIT EINEM DOPPELKNOTER**
DOUBLE KNOTTER AND BALER WITH A DOUBLE KNOTTER
DOUBLE NOUEUR ET PRESSE À BALLES AVEC UN DOUBLE NOUEUR

(30) Priorität: 03.08.2020 DE 102020120445
(43) Veröffentlichungstag der Anmeldung: 09.02.2022
(73) Patentinhaber: Maschinenfabrik Bernard Krone GmbH & Co. KG, 48480 Spelle (DE)
(72) Erfinder: van Roje, Lukas, 49832 Freren (DE)

(56) Entgegenhaltungen:
- EP-A1- 1 584 227
- DE-B- 1 231 947
- DE-T2- 602005 000 693
- US-A- 4 161 097
- US-A1- 2015 272 011

## Beschreibung

Die vorliegende Erfindung betrifft einen als Doppelknoter ausgebildeten Garnknoter zur Herstellung von Knoten eines einen Erntegutballen umgebenden Bindemittels in der Art eines Bindegarns. Die hier in Rede stehenden Garnknoter bilden eine der in Ballenpressen mit einem quader-förmigen Presskanal verwendeten Baugruppen, die dazu dienen, das einen Erntegutballen umgebende Bindematerial am Ende eines Ballenherstellungsprozesses zu verknoten, damit der fertiggestellte Erntegutballen nach dem Auswurf aus dem Presskanal nicht wieder auseinander fällt. Aus der Praxis sind zahlreiche Ausführungsformen von in derartigen Ballenpressen verbauten Garnknotern bekannt.

Aus der EP 2 496 070 B1 ist eine Garnknotereinheit zur Herstellung von zwei unmittelbar aufeinander folgenden Knoten bekannt geworden, die einen, einen Erntegutballen umgebenden Bindemittelstrang zusammenhalten. Zur Herstellung der einen Bindemittelstrang zusammenhaltenden Knoten sind die Garnknoter aus einer, auf einer antreibbaren Knoter-Antriebswelle gelagerten Knoter-Antriebsscheibe sowie aus einem ebenfalls auf der Knoterantriebswelle gelagerten Knoterchassis gebildet, wobei das Knoterchassis die Aufnahmeeinheit für die aus Knoterhaken, Messerhebel und Garnhalter bestehende Knoterbaugruppe bildet. Bei der hier offenbarten Knoterbaugruppe wird deutlich, dass zum Durchtrennen der Bindemittelstränge ein Messerhebel eingesetzt wird, der gesteuert von der Knoter-Antriebsscheibe auf die im Garnhalter geklemmten Bindemittelstränge zubewegt wird und diese dabei durchtrennt werden. Bei dieser unmittelbar aufeinanderfolgenden Herstellung zweier Knoten zeigt sich, dass der im Bereich des Garnhalters befindliche Bindemittelstrang zweimal abgeschnitten wird und somit bei jeder Herstellung von zwei unmittelbar aufeinanderfolgenden Knoten ein Garnrest entsteht, der entweder zu einer Belastung des Futters bei der Verfütterung oder zu einer Verschmutzung der Umwelt führt, wenn diese Garnreste nach der Herstellung der Knoten auf den Feldboden fallen.

Die Druckschrift US 2015/272011 A1 offenbart einen Knoter, umfassend einen Knoterhaken, einen Garnhalter zum Halten von Garn und einen Schneidarm. Der Schneidarm durchtrennt beim Verstellen von einer Ruheposition in eine ausgefahrene Position das Garn zwischen dem Knoterhaken und dem Garnhalter.

Die Druckschrift DE 12 31 947 B offenbart einen Garnhalter für einen Einzelknoter, bei dem ein durchlaufender Garnfaden zwischen einer Zunge eines federnd ausgebildeten Klemmbleches und einer Scheibe reibschlüssig gehalten wird.

Die Druckschrift US 4 161 097 A offenbart eine Ballenpresse mit einem Einzelknoter, bei dem ein bewegliches Maul in Abhängigkeit einer an einer Spindel befestigten Nocke geöffnet und geschlossen wird.

Aufgabe der Erfindung ist es daher, einen Garnknoter und eine Ballenpresse mit einem solchen Garnknoter zur Verfügung zu stellen, bei denen das Anfallen von Garnresten während der Herstellung von zwei unmittelbar aufeinanderfolgenden Knoten zuverlässig vermieden werden, wobei die wesentlichen Funktionsbaugruppen eines Garnknoters nach dem Stand der Technik beibehalten werden.

Diese Aufgabe wird gelöst mit einem Garnknoter nach den Merkmalen des unabhängigen Patentanspruchs 1, mit einer Ballenpresse mit Garnknoter nach den Merkmalen des unabhängigen Patentanspruchs 12 sowie mit einem Verfahren zur Bildung von zwei aufeinander folgenden Knoten zum Zusammenhalten eines, einen Erntegutballen umgebenden Bindemittels mit den Merkmalen des unabhängigen Anspruchs 13. Vorteilhafte Ausführungsformen der Erfindung sind den abhängigen Ansprüchen entnehmbar.

Nach der Erfindung wird ein Garnknoter für eine Ballenpresse zur Bildung von zwei aufeinander folgenden Knoten zum Zusammenhalten eines, einen Erntegutballen umgebenden Bindemittels vorgeschlagen, der mit einem Knoterhaken zum Verknoten der Enden des Bindemittels versehen ist, der drehbar in einem Knoterrahmen gelagert ist, mit einer Halteanordnung, die eine Garnhaltescheibe umfasst, wobei die Garnhaltescheibe am Knoterrahmen drehbar gelagert ist und zum zeitweisen Fördern zweier Bindemittelstränge des Bindemittels vorgesehen ist, mit einer umlaufend antreibbaren Knoterscheibe, an der für jeden der Knoten jeweils erste Antriebsmittel zum Antrieb des Knoterhakens angeordnet sind, und an der wenigsten ein zweites Antriebsmittel zum Antrieb der Garnhaltescheibe angeordnet ist, mit einem Abstreifhebel zum Abstreifen der Knoten vom Knoterhaken, und mit einer Messerklinge zum Durchtrennen der Bindemittelstränge, die im Garnknoter gehaltert ist, wobei die Garnhaltescheibe beim Drehen entlang der Messerklinge geführt wird, so dass die Bindemittelstränge beim Passieren der Messerklinge durchtrennt werden. Das wenigstens eine zweite Antriebsmittel ist erfindungsgemäß derart ausgebildet, dass die Garnhaltescheibe vor dem Fertigstellen des zweiten Knotens angehalten wird, bevor die Bindemittelstränge die Messerklinge passieren, sodass der Bindevorgang so erfolgt, dass lediglich ein einziger Schnitt der Bindemittelstränge zwischen der Herstellung des ersten und des zweiten Knotens erfolgt.

Die Erfindung stellt damit einen Garnknoter für eine Ballenpresse bereit, der in vorteilhafter Weise die wesentlichen Funktionsbaugruppen des Knoters beibehält und bei nur minimalen Aufwendungen an einigen wenigen Bauteilen das Anfallen von Garnresten bei der Herstellung von zwei unmittelbar aufeinanderfolgenden Knoten vermeidet.

Da die Position der Messerklinge erfindungsgemäß so gewählt ist, dass die Bindemittelstränge durch Drehung der Garnhaltescheibe an der Messerklinge vorbeigeführt und dabei geschnitten werden, kann der Bindevorgang so erfolgen, dass lediglich ein einziger Schnitt der Bindemittelstränge zwischen der Herstellung des ersten und des zweiten Knotens erfolgt. Weiterhin wird die Garnhaltescheibe angehalten, bevor ein zweiter Schnitt kurz vor der Fertigstellung des zweiten Knotens erfolgt. Dadurch fallen keine Bindemittelreste bei der Herstellung der beiden Knoten an.

Damit es während der Herstellung des zweiten der unmittelbar aufeinanderfolgenden Knoten nicht zu einem Durchtrennen der Bindemittelstränge kommt, ist es erfindungsgemäß vorgesehen, dass dem Garnknoter eine Messerklinge zugewiesen ist, die im Wesentlichen ortsfest im Garnknoter angeordnet ist. Das bedeutet, dass die Messerklinge zum Durchtrennen der Bindemittelstränge nicht bewegt wird. Der Trennvorgang des Bindemittelstranges wird vielmehr dadurch eingeleitet, dass die Garnhaltescheibe mit den in einer Ausnehmung eingeklemmten Bindemittelsträngen auf die Messerklinge zugedreht wird, so dass dadurch die Bindemittelstränge abgetrennt werden. In einer bevorzugten Ausführungsform ist es vorgesehen, die Messerklinge an einem mit der Garnhaltescheibe zusammenwirken-den Garnklemmhebel anzubringen. In diesem Zusammenhang sei darauf hingewiesen, dass der mit der Garnhaltescheibe zusammenwirkende Garnklemmhebel durch das geklemmte Bindemittel in seiner Position nur unwesentlich verändert wird, so dass die Lage der Messerklinge zur Garnhaltescheibe nahezu unverändert bleibt. In einer weiteren vorteilhaften Ausführungsform ist es denkbar, die Messerklinge am Knoterrahmen anzubringen, so dass damit eine ortsfeste Anordnung im Garnknoter erreicht ist.

In einer bevorzugten Ausgestaltung ist dazu an dem Garnknoter ein Abstreifhebel mit einem Auszieher zum Ausziehen der einen Unterfaden und einen Oberfaden umfassenden Bindemittelstränge aus einer der Ausnehmungen der Garnhaltescheibe des Garnknoters vorgesehen. Das Ausziehen der Bindemittelstränge, aus dem der zweite der unmittelbar aufeinanderfolgenden Knoten geformt wird, erfolgt erfindungsgemäß kurz vor der endgültigen Fertigstellung dieses zweiten Knotens. Damit wird das Abtrennen der Teile der Bindemittelstränge, die sich an einer Rückseite der Garnhaltescheibe zwischen der die Bindemittelstränge für den ersten Knoten aufnehmenden Ausnehmung und der die Bindemittelstränge für den zweiten Knoten aufnehmenden Ausnehmung sicher vermieden.

In weiterer Ausbildung des Garnknoters ist es vorgesehen, dass eine Halteanordnung einen Garnklemmhebel umfasst, wobei der Garnklemmhebel mit der Garnhaltescheibe zusammenwirkt, um die Bindemittelstränge in einer Ausnehmung der Garnhaltescheibe fest zu halten. Dabei umfasst die Garnhaltescheibe zumindest eine Paarung von zwei Ausnehmungen, die in Bezug auf eine Drehbewegung der Garnhaltescheibe in Drehrichtung um eine Garnhaltescheibenachse um einen Versatzwinkel größer 90° entgegen der Uhrzeigerrichtung verdreht zueinander angeordnet sind. Eine erste Ausnehmung dieser Paarung von Ausnehmungen dient nun dazu, die von einer Bindenadel dem Garnknoter zugeförderten Bindemittelstränge zur Bildung des ersten der unmittelbar aufeinanderfolgenden zwei Knoten aufzunehmen, während die um den Versatzwinkel verdreht angeordnete zweite Ausnehmung dieser Paarung für die Aufnahme der Bindemittelstränge für den zweiten der unmittelbar aufeinanderfolgenden zwei Knoten dient. In einer vorteilhaften Weiterbildung der Erfindung können der Garnhaltescheibe zwei Paarungen mit jeweils zwei Ausnehmungen zugeordnet sein, wobei diese zwei Paarungen von Ausnehmungen um 180 ° verdreht zueinander angebracht sind.

Eine bevorzugte Ausführungsform des Garnknoters verfügt über wenigstens ein zweites Antriebsmittel, die der Knoterscheibe zugeordnet sind. In einer ersten vorteilhaften Ausführungsform ist an der Knoterscheibe als zweites Antriebsmittel ein Zahnsegment für einen ununterbrochenen Antrieb der Garnhaltescheibe angebracht. Hierbei wird die Garnhaltescheibe um eine Drehwinkel von 180° gedreht. Das bedeutet, dass die Ausnehmungen an der Garnhaltescheibe aus einer Position, in der die Bindemittelstränge für den ersten Knoten aufgenommen werden, in eine Position verdreht wird, in der die Bindemittelstränge für den zweiten Knoten aufgenommen werden und dann noch darüber hinaus, bis die betreffende Ausnehmung mit den geklemmten Bindemittelsträngen für den zweiten Knoten vor der Messerklinge angehalten wird. In einer weiteren denkbaren Ausführungsform für den Antrieb der Garnhaltescheibe ist es vorgesehen, der Knoterscheibe zwei als Zahnsegmente ausgebildete zweite Antriebsmittel zu zuordnen, die jedoch zunächst eine erste Drehbewegung an der Garnhaltescheibe bewirken, um dann nach einer zeitlichen Unterbrechung der Antriebsbewegung der Garnhaltescheibe diese in eine weitere Drehbewegung zu versetzen. Beide Drehbewegungen zusammen erstrecken sich jedoch auch hierbei über einen Drehwinkel von 180°.

In einer weiteren vorteilhaften Ausgestaltung der Erfindung ist es vorgesehen, dem Garnknoter einen Knoterhaken zu zuordnen, welcher zwischen zwei feststehenden Klemmflügeln, die beim Knotenbildungsvorgang zur Bildung einer Bindemittelschlaufe vorgesehen sind, einen Spalt aufweist, der das Abstreifen der Knoten von den Klemmflügeln am Ende des jeweiligen Knotenbildungsvorganges unterstützt. Um die Bindemittelschlaufe zu bilden, werden die beiden Bindemittelstränge beim Drehen des Knoterhakens um diesen gelegt. Die Bindemittelschlaufe umfasst daher beide Bindemittelstränge. Bevorzugt ist dieser Knoterhaken dabei so gestaltet, dass sich im Bezug zu einer zweiten Raumrichtung ein schwenkbeweglicher Klemmflügel mit einer sich in den Spalt erstreckenden Anformung zwischen den feststehenden Klemmflügeln befindet und dazu eingerichtet ist, den Knotenbildungsvorgang dadurch abzuschließen, dass die abgeschnittenen freien oder die durch den Abstreifhebel des Garnknoters aus einer Ausnehmung der Garnhaltescheibe herausgezogenen freien Enden der Bindemittelstränge beim Abstreifen der Bindemittelschlaufe von den feststehenden Klemmflügeln des Knoterhakens in die Bindemittelschlaufe mit Hilfe der Anformung eingezogen werden. Das Festziehen der Bindemittelschlaufe schließt den Knotenbildungsvorgang ab. Bereits beim Festziehen der Bindemittelschlaufe wird der Knoten durch den Spalt zwischen den feststehenden Klemmflügeln in Richtung des Erntegutballens gezogen und verlässt dadurch den Bereich des Garnknoters. Eine vorteilhafte Gestaltung des Spaltes zwischen den feststehenden Klemmflügeln des Garnknoters weist eine schlüssellochartige Form auf.

Die Aufgabe der Erfindung wird weiterhin durch eine Ballenpresse gelöst, die neben den aus dem Stand der Technik bekannten Funktionsbaugruppen wie einer Aufnahmevorrichtung zur Aufnahme des zu pressenden Erntegutes, einer Förder- und Schneidvorrichtung zur Beförderung des Erntegutes in einen vorzugsweise quaderförmig ausgebildeten Presskanal, in dem ein hin- und her beweglich angetriebener Presskolben für die Verdichtung des Erntegutes sorgt, mit einer Mehrzahl der erfindungsgemäßen Garnknoter ausgerüstet ist. Die Anzahl der an einer Ballenpresse verbauten Garnknoter ist dabei beispielsweise von der Ballenbreite des Erntegutballens oder auch von der geforderten Verdichtung des Erntegutes im Erntegutballen abhängig.

Die Aufgabe der Erfindung wird außerdem von einem mit dem vorbeschriebenen Garnknoter auszuführenden Verfahren gelöst, bei dem zur Bildung von zwei aufeinander folgenden Knoten zum Zusammenhalten eines, einen Erntegutballen umgebenden Bindemittels zwischen einem ersten und einem zweiten Knoten die Bindemittelstränge durchtrennt werden. Das Verfahren zeichnet sich dadurch aus, dass die Garnhaltescheibe vor dem Passieren der Messerklinge der Bindemittelstränge vor dem Fertigstellen des zweiten Knotens angehalten wird. Dazu ist das zweite Antriebsmittel ausgebildet.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) schematisch eine Ballenpresse und in (b) eine Knoteranordnung für die Ballenpresse aus (a) mit einer Vielzahl Garnknotern;
- Fig. 2: in (a) - (k) jeweils einen der Garnknoter oder eine vergrößerte Teilansicht des Garnknoters der Knoteranordnung der Fig. 1 (b) in einer perspektivischen Ansicht;
- Fig. 3: in (a) eine vergrößerte Teilansicht des Garnknoters der Fig. 2; in (b) eine Garnhaltescheibe für den Garnknoter aus (a); in (c) einen Knoterhaken für den Garnknoter aus (a) in einer Seitenansicht; in (d) eine Draufsicht auf den Knoterhaken aus (c), und in (e) eine perspektivische Ansicht des Knoterhakens aus (c); und
- Fig. 4: in (a) eine weitere perspektivische Ansicht des Garnknoters der Fig. 2; und in (b) eine perspektivische Ansicht einer weiteren Ausführungsform eines Garnknoters für die Knoteranordnung der Fig. 1 (b).

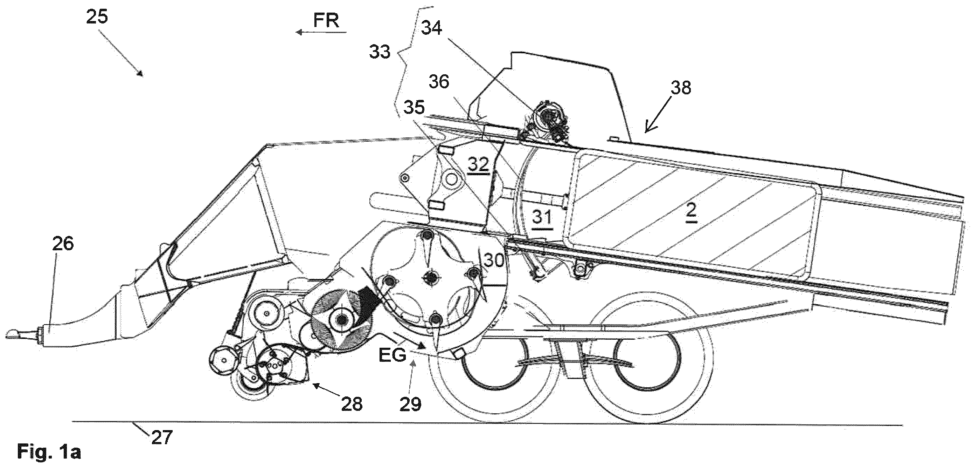

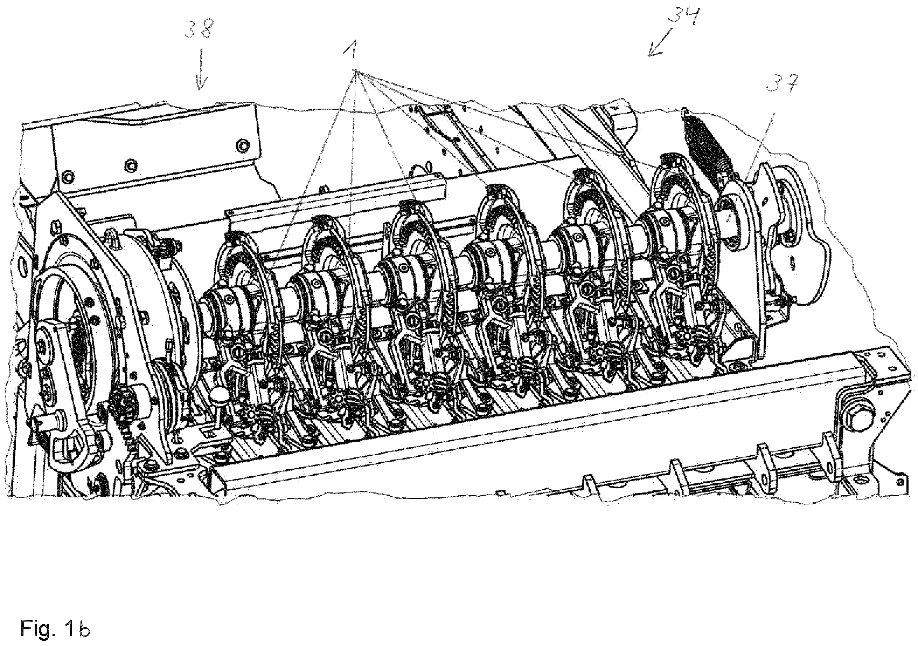

Fig. 1 zeigt in (a) schematisch eine Ballenpresse 25, hier eine Quaderballenpresse. Im Folgenden werden die Begriffe Ballenpresse 25 und Quaderballenpresse synonym verwendet.

Die Ballenpresse 25 ist dazu vorgesehen, von einer Zugmaschine (nicht gezeigt) gezogen zu werden. Sie weist dafür in einer Fahrtrichtung FR vorn eine Anhängerkupplung 26 auf. Die Erfindung ist aber auch auf selbstfahrende Ballenpressen anwendbar.

Die Ballenpresse 25 weist als Aufnahmevorrichtung 28 eine Pick- up zur Aufnahme von Erntegut vom Boden 27 auf. Das Erntegut wird einer Schneidvorrichtung (nicht bezeichnet) zugeführt, die der Aufnahmevorrichtung 28 in einer Gutflussrichtung EG nachgeordnet ist. Nach dem Schneiden wird es einer Förder- und Sammelvorrichtung 29 zugeführt, die zum Sammeln und Vorpressen des Ernteguts vorgesehen ist. Die Förder- und Sammelvorrichtung 29 weist dafür eine Sammelkammer 30 auf. In Gutflussrichtung EG ihr nachgeordnet ist ein Presskanal 31 vorgesehen. Bei ausreichender Vorverdichtung des Erntegutes wird dieses mittels eines als Zubringerrechen (nicht bezeichnet) ausgebildeten Rechens der Förder- und Sammelvorrichtung 29 in den Presskanal 31 gefördert. Dort wird es mit einem Presskolben 32, der im Presskanal 31 zyklisch hin und her bewegt wird, zu einem Quaderballen 2 gepresst.

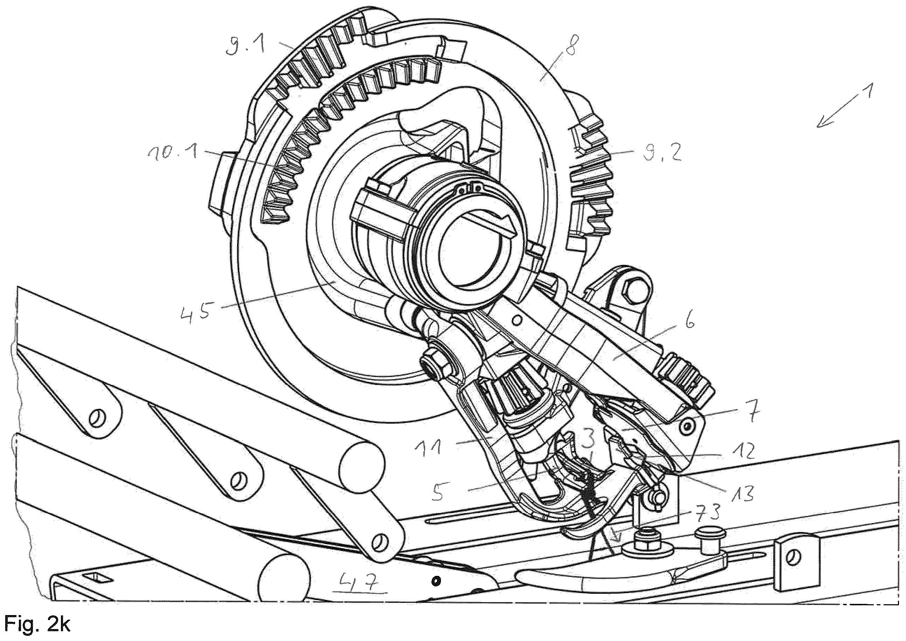

Die Quaderballenpresse 25 umfasst eine Bindevorrichtung 33, die zum Binden des Quaderballens 2 vorgesehen ist, damit dieser nicht mehr auseinanderfällt. Dafür umfasst die Bindevorrichtung 33 eine Knoteranordnung 34 mit einer Vielzahl Garnknotern 1 (s. Fig. 1(b)). Die Garnknoter 1 sind jeweils dafür vorgesehen, Bindemittelstränge 4.1, 4.2 aus einem fadenförmigen Bindemittel, nämlich einen Oberfaden 4.1 und einen Unterfaden 4.2, miteinander zu einem Knoten 3 (s. Fig. 2 (k)) zu verknoten. Die Garnknoter 1 sind an einer Oberseite 38 der Ballenpresse 25 oberhalb des Presskanals 31 angeordnet.

Der Begriff Bindemittelstrang wird im Rahmen dieser Erfindung synonym für den Oberfaden 4.1 und den Unterfaden 4.2 genutzt.

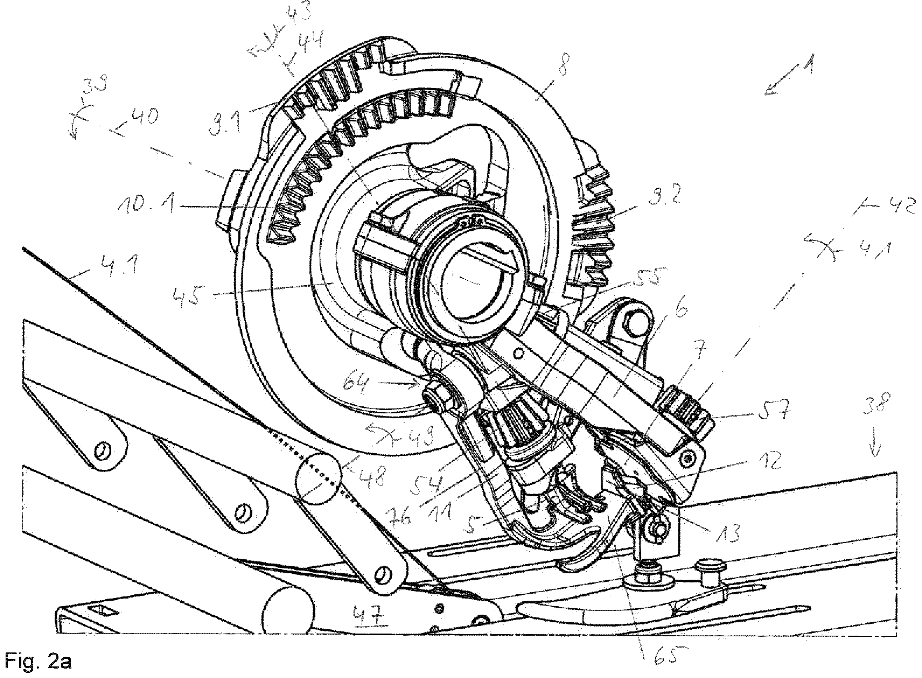

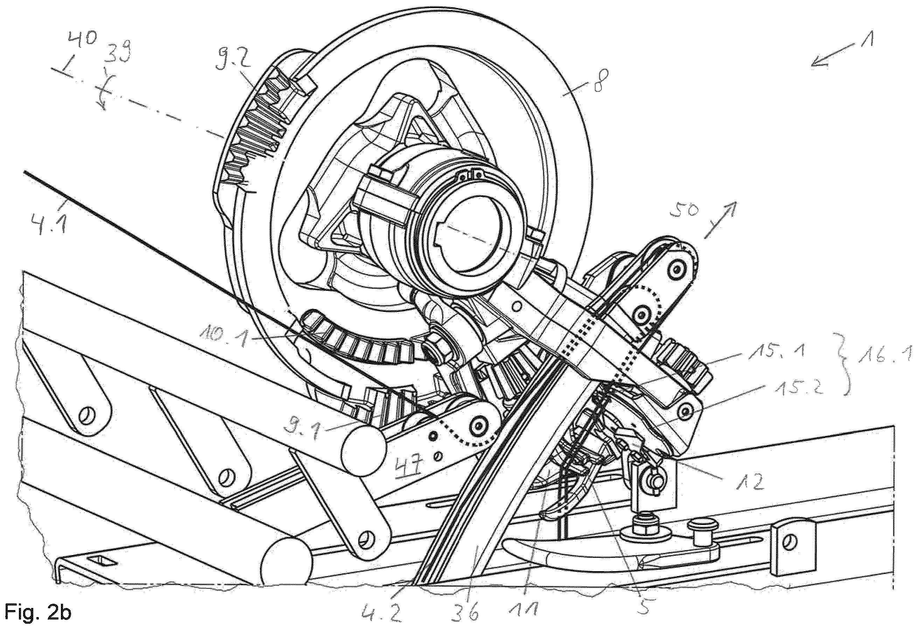

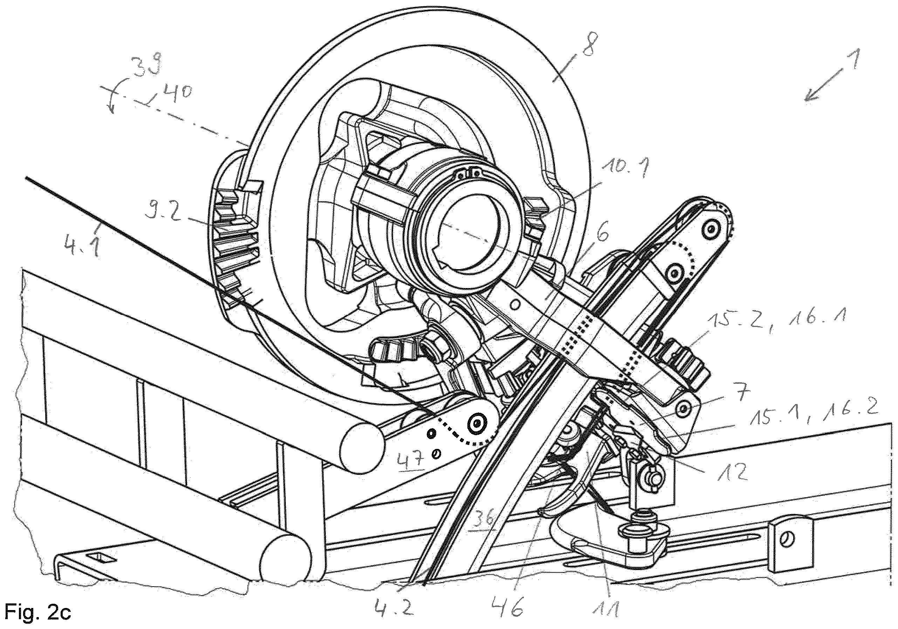

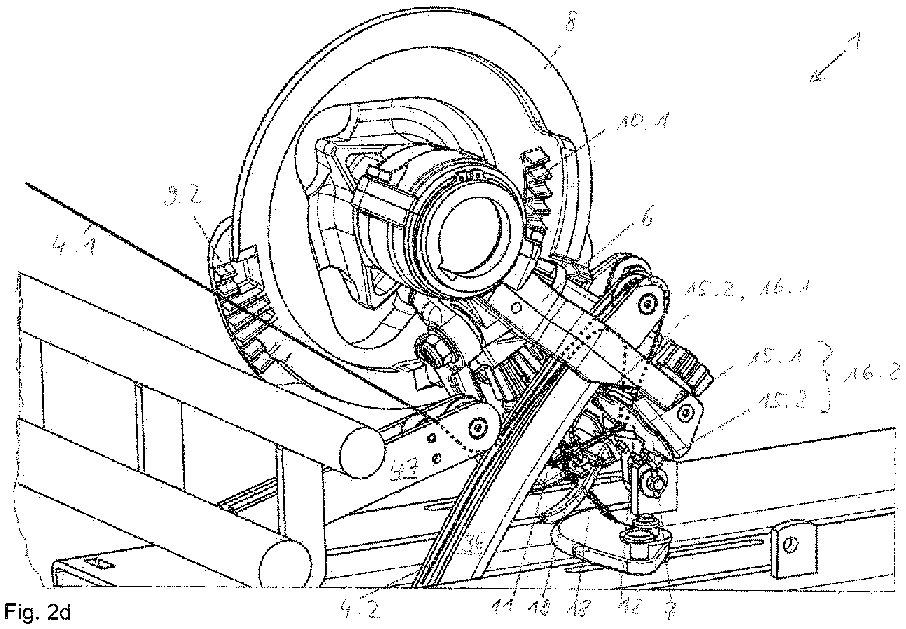

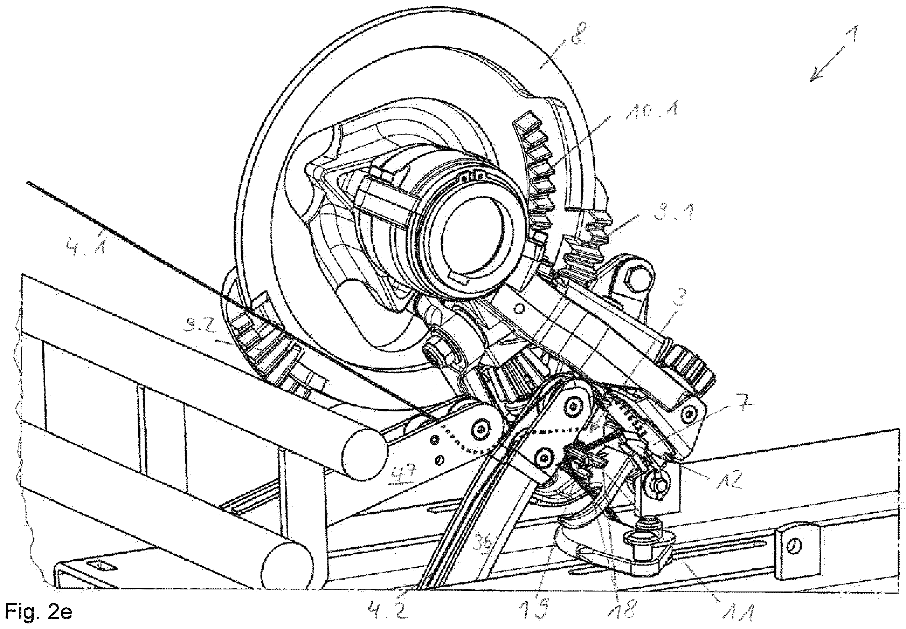

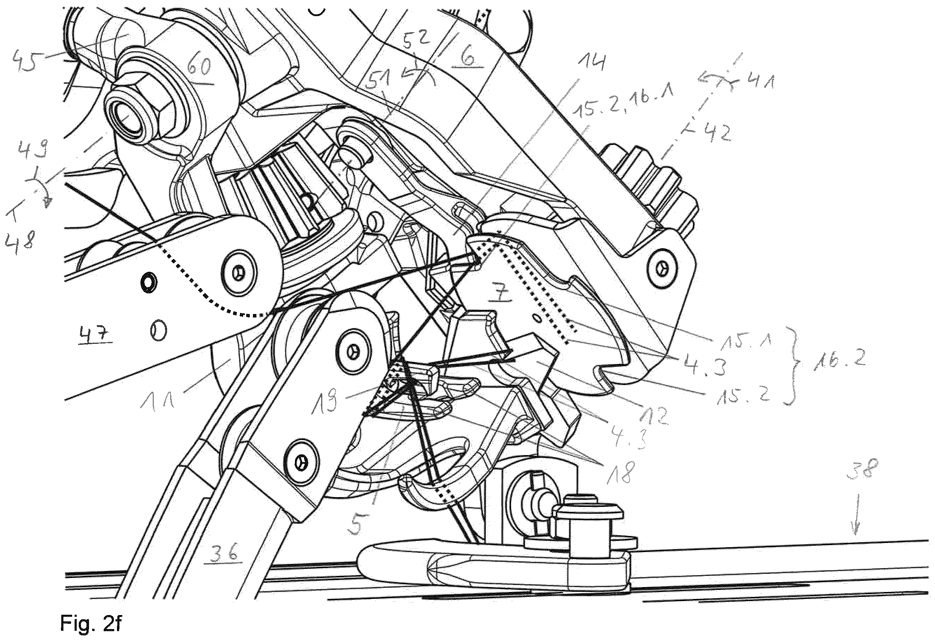

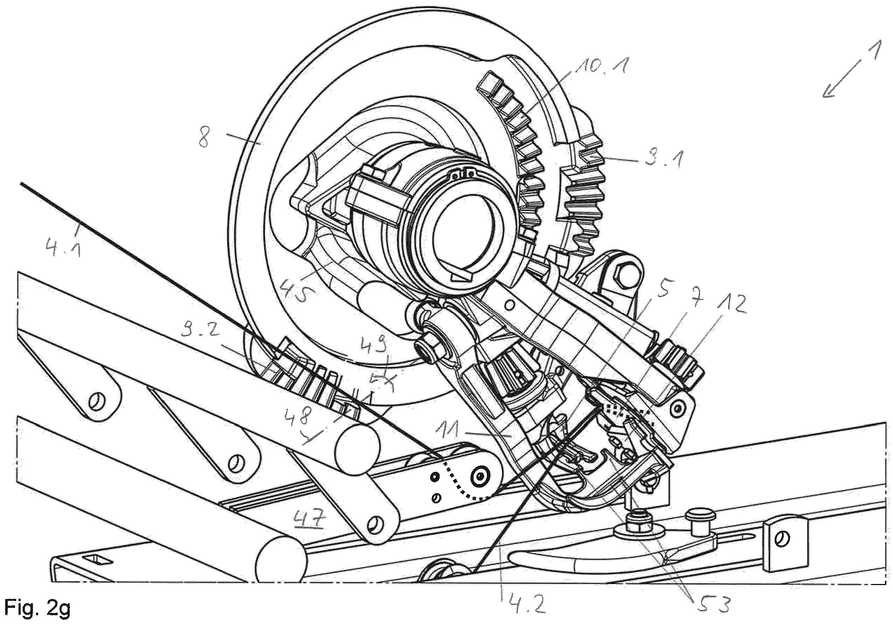

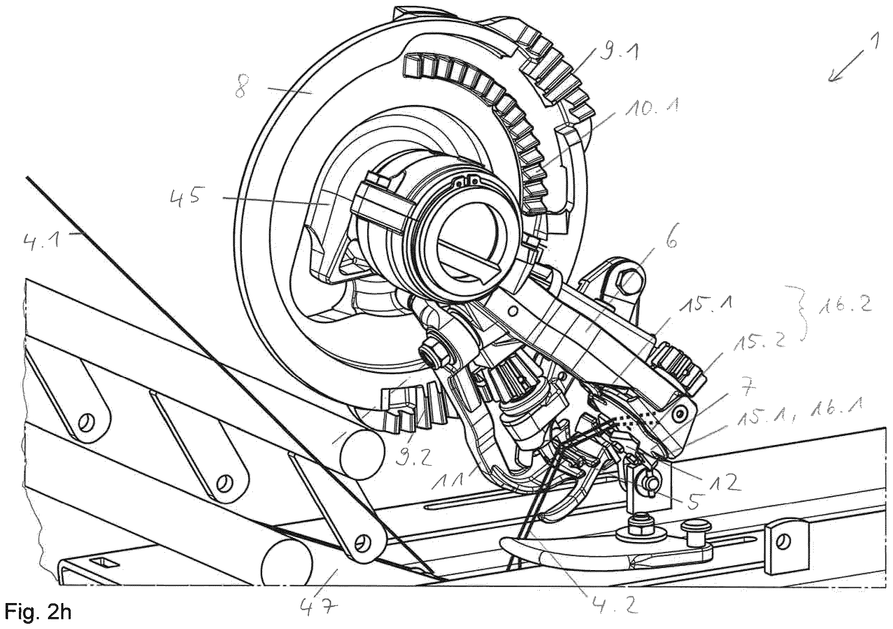

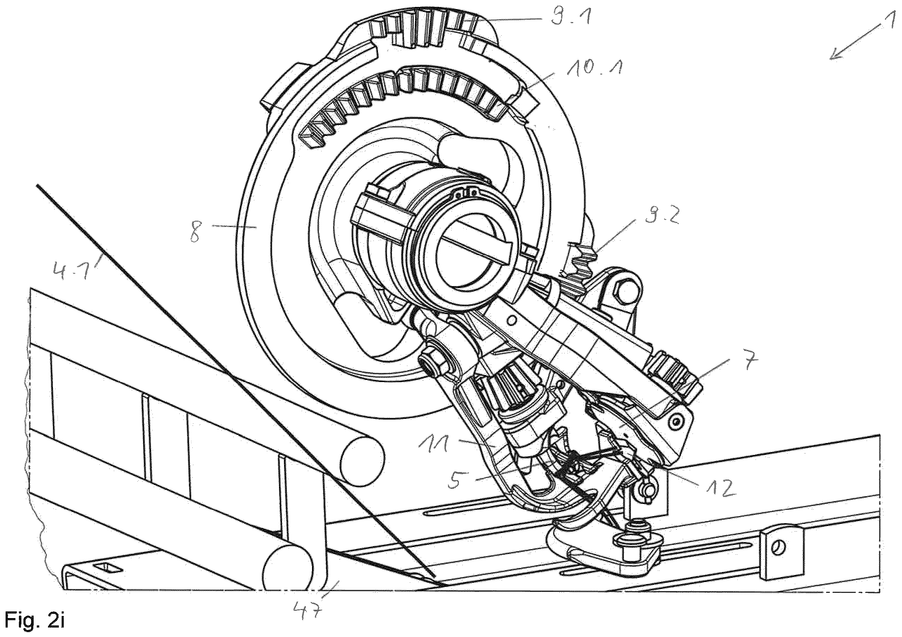

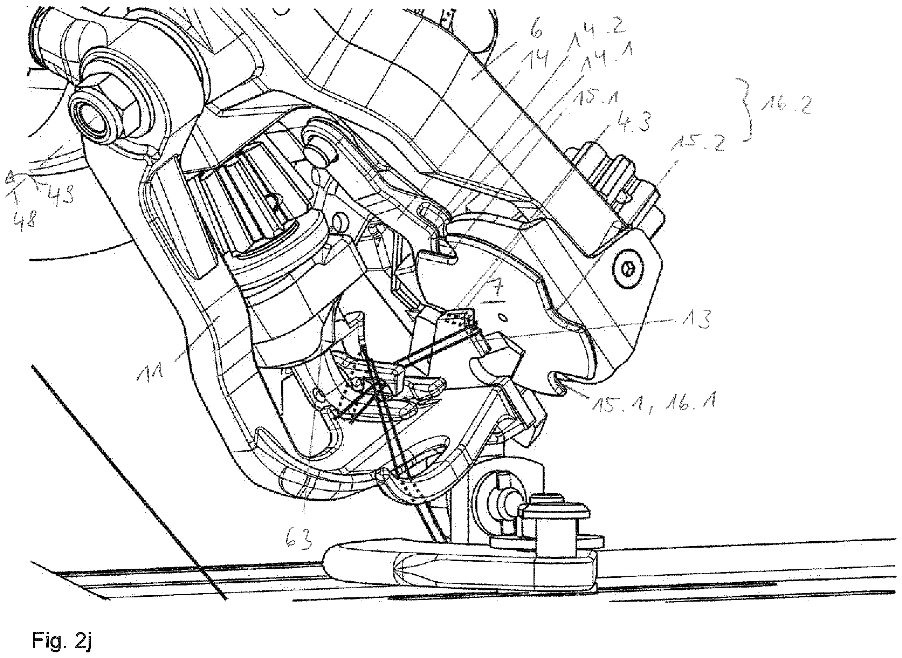

Zum Zuführen der Oberfäden 4.1 weist die Bindevorrichtung 22 für jeden der Garnknoter 1 eine Obergarnnadel 47 (s. Fig. 2) auf. Weiterhin umfasst die Bindevorrichtung 33 eine Untergarnführung 35, die zum Führen der Unterfäden 4.2 vorgesehen ist. Die Untergarnführung 35 ist unterhalb des Presskanals 31 angeordnet. Sie umfasst für jeden der Garnknoter 1 jeweils eine Untergarnnadel 36. Bei Antrieb der Untergarnführung 35 werden die Untergarnnadeln 35 und mit ihnen die Unterfäden 4.2 jeweils zu dem ihnen zugeordneten Garnknoter 1 geführt.

Ein Erntegutballen 2 wird gebunden, wenn ein Sollwert für eine Ballenlänge erreicht oder überschritten ist.

Fig. 1 (b) zeigt die Knoteranordnung 34 für die Ballenpresse 25 aus Fig. 1 (a). Die Knoteranordnung 34 ist an der Oberseite 38 der Ballenpresse 25 angeordnet und weist die Vielzahl Garnknoter 1 auf. Die Garnknoter 1 sind entlang einer Knoterwelle 37 voneinander beabstandet angeordnet.

Fig. 2 zeigt in (a) - (k) jeweils einen der Garnknoter 1 oder eine vergrößerte Teilansicht des Garnknoters 1 der Knoteranordnung 34 der Fig. 1 (b). Die vergrößerten Ansichten zeigen die Fig. 2 (f) und 2 (j).

Der Garnknoter 1 weist eine Knoterscheibe 8 auf, die drehfest an der Knoterwelle 37 gehaltert ist. Die Knoterscheibe 8 dreht sich daher bei Antrieb der Knoterwelle 37 mit dieser. Zudem weist der Garnknoter 1 einen Knoterrahmen 6 auf, der gegenüber der Knoterwelle 37 drehbar an dieser angeordnet ist, so dass er sich bei Antrieb der Knoterwelle 37 nicht mit dieser dreht und ortsfest in der Ballenpresse 25 angeordnet ist.

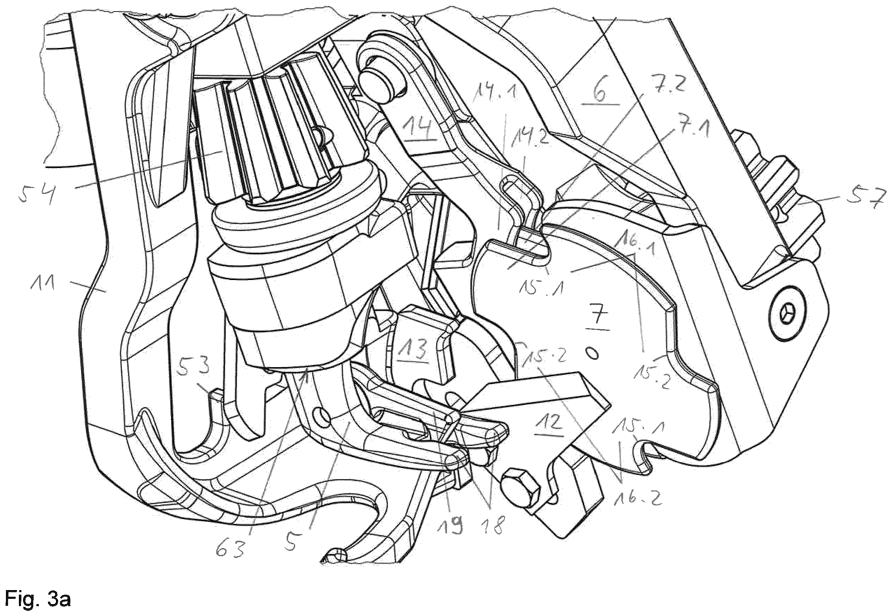

Die Fig. 2 (a) - (e), (g) - (i) und (k) zeigen den Garnknoter 1 in derselben perspektivischen Ansicht jeweils in verschiedenen Antriebszuständen, die dieser bei Antrieb der Knoterwelle 37 durchläuft, wobei sich die Antriebszustände durch einen Drehwinkel (nicht bezeichnet) voneinander unterscheiden, um den sich die Knoterscheibe 8 mit ihr gegenüber einer Nullstellung gedreht hat. Die Fig. 2 (f) zeigt einen vergrößerten Ausschnitt der Fig. 2 (e) und Fig. 2 (j) zeigt einen vergrößerten Ausschnitt der Fig. 2 (i), wobei Fig. 2 (f) und 2 (j) jeweils noch eine weitere perspektivische Ansicht zeigen. Die Fig. 3 (a) zeigt einen vergrößerten Ausschnitt aus dem Garnknoter 1 der Fig. 2 ohne die Bindemittelstränge 4.1, 4.2 bei einem Drehwinkel von etwa 320°.

Der Garnknoter 1 ist dazu ausgebildet, zwei aufeinander folgende Knoten 3 zu bilden, die zum Verbinden des, den Erntegutballen 2 umgebenden Oberfadens 4.1 und Unterfadens 4.2 des Bindemittels miteinander vorgesehen sind. Es handelt sich somit um einen Doppelknoter. Die Begriffe Garnknoter 1 und Doppelknoter werden im Rahmen dieser Erfindung daher synonym verwendet.

Der Garnknoter 1 weist dafür einen Knoterhaken 5 zum Verknoten der Enden 4.3 des Bindemittels 4.1, 4.2 auf, der um eine Knoterhakenachse 44 in eine Knoterhakendrehrichtung 43 drehbar in dem Knoterrahmen 6 gelagert ist.

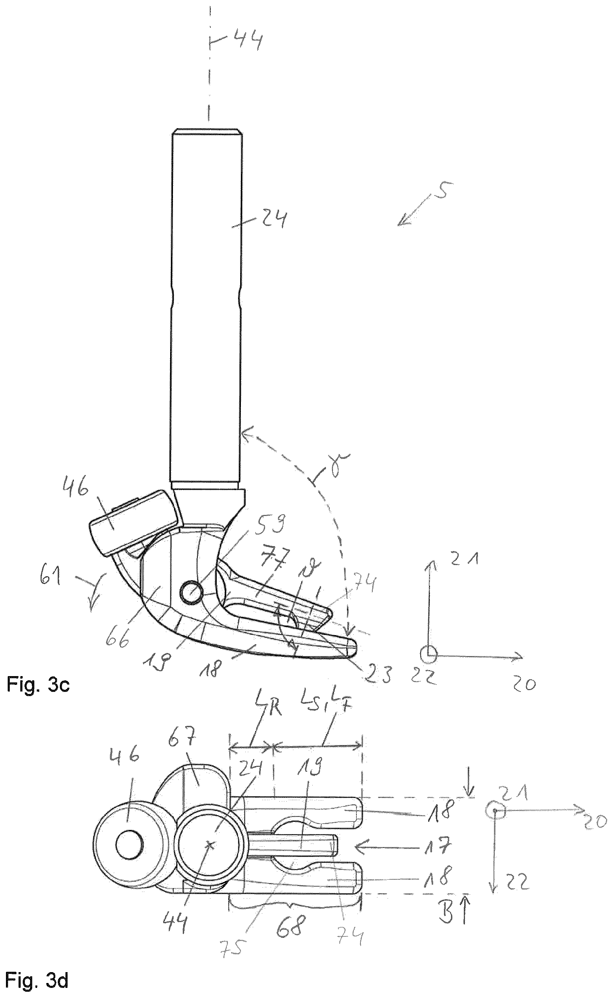

Der Knoterhaken 5 ist in den Fig. 3 (c) und (d) separat dargestellt. Er weist zwei in einer dritten Raumrichtung 22 voneinander beabstandete feststehende Klemmflügel 18 auf, die eine Erstreckungskomponente (nicht gezeigt) in eine erste Raumrichtung 20 aufweisen. Dabei ist die dritte Raumrichtung 22 quer zur ersten Raumrichtung 20 angeordnet. Zwischen den feststehenden Klemmflügeln 18 ist ein etwa schlüssellochförmiger Spalt 17 vorgesehen. In einer zweiten Raumrichtung 21 ist zu den feststehenden Klemmflügeln 18 höhenversetzt zudem ein schwenkbeweglicher Klemmflügel 19 angeordnet. Die zweite Raumrichtung 21 erstreckt sich quer zur ersten Raumrichtung 20 sowie quer zur dritten Raumrichtung 22. Der schwenkbewegliche Klemmflügel 19 weist eine hakenförmige Anformung 23 auf, die sich gegen die zweite Raumrichtung 21 erstreckt, so dass sie in Richtung des Spaltes 17 zeigt. In einem ungeöffneten Zustand (nicht bezeichnet), den die Fig. 3 (c) zeigt, taucht die Anformung 23 zumindest geringfügig in den Spalt 17 ein. Der schwenkbewegliche Klemmflügel 19 ist in einem Schwenkflügellager 59, das in der dritten Raumrichtung 22 oberhalb der feststehenden Klemmflügel 18 angeordnet ist, schwenkbar gelagert.

Zum Verschwenken des schwenkbeweglichen Klemmflügels 19 vom ungeöffneten in einen geöffneten Zustand (nicht gezeigt) weist der Knoterhaken 5 eine Steuerrolle 46 auf, die beim Drehen des Knoterhakens 5 um die Knoterhakenachse 44 entlang einer Steuerkulisse 63 (s. Fig. 3 (a)) abrollt. Die Steuerrolle 46 ist an einer den feststehenden Klemmflügeln 18 abgewandten Seite (nicht bezeichnet) des Knoterhakens 5 angeordnet. Sie ist am schwenkbeweglichen Klemmflügel 19 befestigt und so geformt, dass dieser entsprechend der Kontur der Steuerkulisse in und gegen eine Flügelschwenkrichtung 61 verschwenkt, wenn sich die Steuerrolle 46 entlang der Steuerkulisse abrollt. Beim Verschwenken des schwenkbeweglichen Klemmflügels 19 in Flügelschwenkrichtung 61 öffnet sich dieser gegenüber den feststehenden Klemmflügeln 18. In diesem geöffneten Zustand können Bindemittelstränge 4.1, 4.2 in den Zwischenraum (nicht bezeichnet) zwischen die feststehenden Klemmflügel 18 und den schwenkbeweglichen Klemmflügel 19 eingelegt werden. Beim Zurückschwenken vom geöffneten Zustand in den ungeöffneten Zustand werden die Bindemittelstränge 4.1, 4.2 zwischen den feststehenden Klemmflügeln 18 und dem schwenkbeweglichen Klemmflügel 19 verklemmt.

Der Garnknoter 1 weist zudem eine Halteanordnung (nicht bezeichnet) auf, die zum Halten der Bindemittelstränge 4.1, 4.2 vorgesehen ist. Die Halteanordnung weist eine Garnhaltescheibe 7 auf, die am Knoterrahmen 6 um eine Garnhaltescheibenachse 42 in eine Garnhaltescheibendrehrichtung 41 drehbar gelagert ist. Die Garnhaltescheibe 7 ist zum zeitweisen Fördern der beiden Bindemittelstränge 4.1, 4.2 des Bindemittels vorgesehen.

An ihrer Außenkontur 62 (s. Fig. 3 (c)) weist sie wenigstens eine erste Paarung 16.1 von zwei Ausnehmungen 15.1, 15.2 auf. Dabei ist jede der beiden Ausnehmungen 15.1, 15.2 jeweils für das Aufnehmen der Bindemittelstränge 4.1, 4.2 beim Herstellen eines der beiden Knoten 3 vorgesehen. In Bezug auf eine Drehbewegung der Garnhaltescheibe 7 in Garnhaltescheibendrehrichtung 41 um die Garnhaltescheibenachse 42 sind die Ausnehmungen 15.1, 15.2 um einen Versatzwinkel α, der größer als 90° ist, entgegen der Uhrzeigerrichtung verdreht zueinander angeordnet. Die in Bezug auf die Drehbewegung in Garnhaltescheibendrehrichtung 41 frühere Ausnehmung 15.1 ist zur Aufnahme der Bindemittelstränge 4.1, 4.2 für den ersten der beiden Knoten 3, und die in Bezug auf die Drehbewegung in Garnhaltescheibendrehrichtung 41 spätere Ausnehmung 15.2 ist zur Aufnahme der Bindemittelstränge 4.1, 4.2 für den zweiten der beiden Knoten 3 vorgesehen. Der über die 90° hinausgehende Versatzwinkel α ermöglicht ein sicheres erneutes Einlegen der Bindemittelstränge 4.1, 4.2 in die Garnhaltescheibe 7 für die Herstellung des zweiten Knotens 3.

Die hier genutzte Garnhaltescheibe 7 weist zudem eine zweite Paarung 16.2 von Ausnehmungen 15.1, 15.2 auf, die zum Herstellen eines folgenden Knotenpaars 3 vorgesehen ist. Die beiden Paarungen 16.1, 16.2 von Ausnehmungen 15.1, 15.2 sind dafür an der Garnhaltescheibe 7 um 180° verdreht zueinander angeordnet.

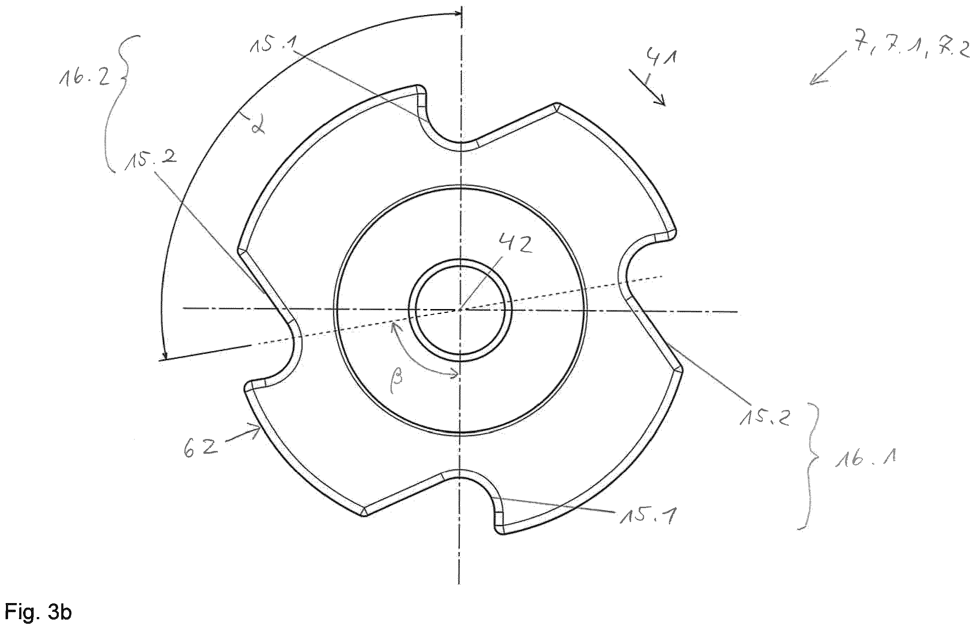

Die Garnhaltescheibe 7 umfasst hier zwei zueinander parallele Scheiben 7.1, 7.2 (s. Fig. 3 (a)) derselben Größe, die voneinander beabstandet sind und zwischen denen sich ein Anschlag (nicht gezeigt) konzentrisch um die Garnhaltescheibenachse 42 erstreckt. Beide Scheiben 7.1, 7.2 der Garnhaltescheibe 7 weisen daher beide Paare 16.1, 16.2 Ausnehmungen 15.1, 15.2 auf. Zudem sind die Ausnehmungen 15.1, 15.2 in demselben Drehwinkel (s. Fig. 3 (b)) angeordnet.

Die Halteanordnung umfasst weiterhin einen Garnklemmhebel 14 (s. Fig. 3 (a), 2 (f)), wobei der Garnklemmhebel 14 mit der Garnhaltescheibe 7 zusammenwirkt, um die Bindemittelstränge 4.1, 4.2 in einer der Ausnehmungen 15.1, 15.2 festzuhalten. Der Garnklemmhebel 14 weist dafür wenigstens eine Klemmstrebe 14.1 auf, die zwischen den Scheiben 7.1, 7.2 der Garnklemmscheibe 7 angeordnet ist. Im vorliegenden Ausführungsbeispiel weist er zudem eine weitere Klemmstrebe 14.2 auf, die zur wenigstens einen Klemmstrebe 14.1 im Wesentlichen parallel angeordnet ist. Die zweite Klemmstrebe 14.2 verbessert das Halten der Bindemittelstränge 4.1, 4.2 gegenüber nur einer Klemmstrebe 14.1.

Die wenigstens eine Klemmstrebe 14.1 ist zwischen den beiden Scheiben 7.1, 7.2 der Garnklemmscheibe 7 angeordnet. Sie liegt an dem Anschlag der Garnhaltescheibe 7 an, wenn kein Bindemittelstrang 4.1, 4.2 in die Garnhaltescheibe 7 eingelegt ist.

Der Garnklemmhebel 14 wird mit der Kraft einer Feder (nicht gezeigt) um eine Klemmachse 51 in eine Klemmrichtung 52 gegen den Anschlag gedrückt. Beim Drehen der Garnhaltescheibe 7 werden die in die Ausnehmung 15.1, 15.2 eingelegten Bindemittelstränge 4.1, 4.2 zwischen der Garnhaltescheibe 7 und dem Garnklemmhebel 14 verklemmt. Da der Garnklemmhebel 14 lediglich mit der Kraft der Feder gegen den Anschlag gedrückt wird, kann er, insbesondere bei dickeren Bindemitteln, zumindest geringfügig gegen die Klemmrichtung 52 ausweichen. Die Kraft der Feder ist aber ausreichend groß vorgesehen, um ein sicheres Halten der Bindemittelstränge 4.1, 4.2 beim Herstellen des Knotens 3 zu gewährleisten.

Weiterhin weist der Garnknoter 1 die umlaufend antreibbare Knoterscheibe 8 auf. Die Knoterscheibe 8 erstreckt sich konzentrisch um eine Knoterscheibenachse 40, die sich in Richtung der Knoterwelle 37 erstreckt. An der Knoterscheibe 8 sind für jeden der beiden Knoten 3 jeweils erste Antriebsmittel 9.1, 9.2 zum Antrieb des Knoterhakens 5 angeordnet. Zum Antrieb des Knoterhakens 5 ist an einem Schaft 24 (s. Fig. 3 (c)) des Knoterhakens 5 ein Antriebsrad 54 drehfest befestigt. Die ersten Antriebsmittel 9.1, 9.2 sind als Zahnsegmente ausgebildet, die beim Umlauf der Knoterscheibe 8 in Eingriff mit Zähnen (nicht bezeichnet) des Antriebsrades 54 geraten, so dass das Antriebsrad 54 beim Umlauf der Knoterscheibe 8 in eine Drehrichtung 30 angetrieben wird. Dadurch wird der Knoterhaken 5 um die Knoterhakenachse 44 in die Knoterhakendrehrichtung 43 gedreht.

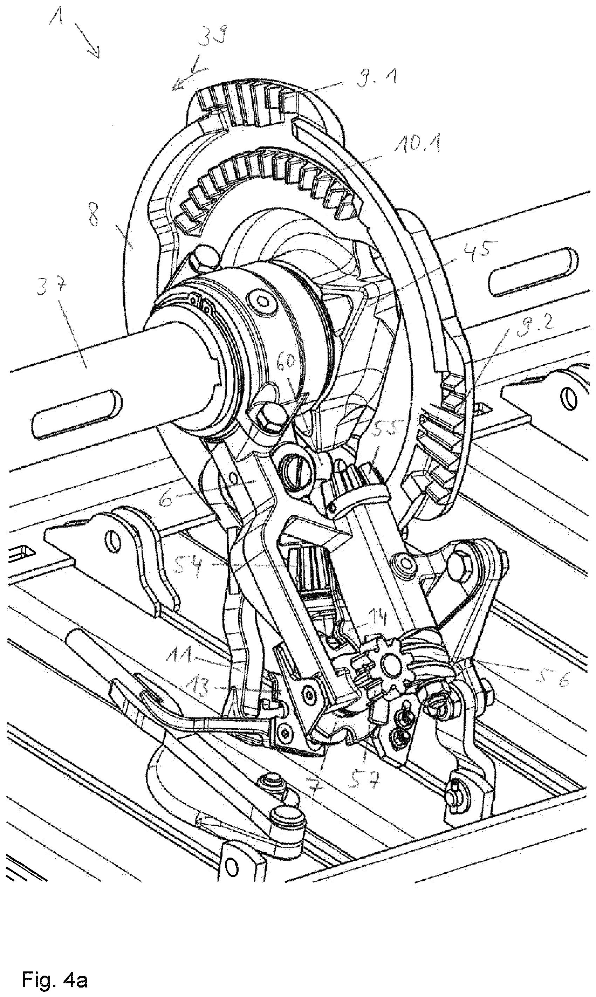

Zudem ist an der Knoterscheibe 8 wenigsten ein zweites Antriebsmittel 10.1 zum Antrieb der Garnhaltescheibe 7 angeordnet. Auch das zweite Antriebsmittel 10.1 ist als Zahnsegment ausgebildet. Zum Antrieb der Garnhaltescheibe 7 ist ein Triebel 55 am Knoterrahmen 6 befestigt (s. hierzu Fig. 4(a)), dessen Zähne (nicht bezeichnet) beim Umlauf der Knoterscheibe 8 mit dem zweiten Antriebsmittel 10.1 in Eingriff geraten. Dadurch wird der Triebel 55 angetrieben. Der Triebel 55 ist endseitig eines Triebelschafts (nicht gezeigt) angeordnet, an dessen gegenüberliegendem Ende (nicht bezeichnet) ein Schneckenrad 56 vorgesehen ist. Das Schneckenrad 56 kämmt mit einem Scheibenrad 57, so dass sich dieses beim Antrieb des Schneckenrades 56 um die Garnhaltescheibenachse 42 in die Garnhaltescheibendrehrichtung 41 dreht. Auch das Scheibenrad 57 ist endseitig eines Scheibenschafts (nicht gezeigt) angeordnet, an dessen gegenüberliegendem Ende (nicht bezeichnet) die Garnhaltescheibe 7 drehfest befest'gt ist. Die Garhaltescheibe 7 dreht sich daher bei Antrieb des Scheibenrades 57 mit diesem.

Das als Zahnsegment ausgebildete zweite Antriebsmittel 10.1, der Triebel 55, das Schneckenrad 56 sowie das Scheibenrad 57 sind hier so aufeinander abgestimmt, dass eine Übersetzung ins Langsamere von 1 : 4 erfolgt. In Abhängigkeit von einem Durchmesser (nicht bezeichnet) der Knoterscheibe 8, einem Durchmesser (nicht bezeichnet) der Garnhaltescheibe 7 und der Zähnezahl (nicht bezeichnet) an diesen Komponenten kann aber auch eine andere Untersetzung vorgesehen sein.

Der Garnknoter 1 weist weiterhin einen Abstreifhebel 11 zum Abstreifen der Knoten 3 vom Knoterhaken 5 auf. Der Abstreifhebel 11 ist um ein Schwenklager 64, durch das sich eine Schwenkachse 48 erstreckt, in und gegen eine Schwenkrichtung 49 schwenkbar.

Der Abstreifhebel 11 ist etwa L- förmig ausgebildet. Er weist einen Arm 76 (s. Fig. 2 (a)) auf, der sich vom Schwenklager 64 ausgehend zu einer sich etwa quer zu ihm erstreckenden Querplatte 65 erstreckt.

An der Knoterscheibe 8 ist eine Abstreifkulisse 45 angeordnet, an der sich eine Laufrolle 60 (s. Fig. 4 (a)), die am Abstreifhebel 11 angeordnet ist, abrollt. Der Abstreifhebel 11 wird in Abhängigkeit vom Verlauf der Abstreifkulisse 45 um die Schwenkachse 48 in die Schwenkrichtung 49 und zurück verschwenkt. Am Abstreifhebel 11 sind stiftförmige Abzieher 53 angeordnet, die voneinander beabstandet sind. Ein Abstand (nicht bezeichnet) der Abzieher 53 voneinander ist geringfügig größer als eine Breite B (s. Fig. 3 (d)) des Knoterhakens 5. Die Abzieher 53 sind zum Abziehen eines Knotens 3 vom Knoterhaken 5 vorgesehen. Dafür wird der Abstreifhebel 11 in die Schwenkrichtung 49 verschwenkt. Nach dem Abziehen wird der Abstreifhebel 11 wieder zurück verschwenkt.

Weiterhin weist der Abstreifhebel 11 einen Auszieher 13 auf. Der Auszieher 13 erstreckt sich etwa parallel zum Arm 76 und ist von diesem beabstandet. Er ist an der Querplatte 65 befestigt. Mit dem Auszieher 13 sind die Enden 4.3 der Bindemittelstränge 4.1, 4.2 zum Fertigstellen des zweiten Knotens 3 aus der Halteanordnung herausziehbar.

Zum Durchtrennen der Bindemittelstränge 4.1, 4.2 ist im Garnknoter 1 zudem eine Messerklinge 12 gehaltert. Die Messerklinge 12 ist so positioniert, dass die Garnhaltescheibe 7 beim Drehen in die Garnhaltedrehrichtung 41 entlang der Messerklinge 12 geführt wird. Dadurch werden die in die Halteanordnung eingelegten Bindemittelstränge 4.1, 4.2 beim Passieren der Messerklinge 12 durchtrennt. Die Messerklinge 12 kann dafür im Wesentlichen ortsfest im Garnknoter 1, insbesondere am Knoterrahmen, befestigt sein. In der hier dargestellten Ausführungsform ist sie am Garnklemmhebel 14 angebracht. In dieser Ausführungsform kann sie beim Ausweichen des Garnklemmhebels 14 in Abhängigkeit von der Dicke des verwendeten Bindemittels mit diesem geringfügig ausweichen. Daher ist die Messerklinge 12 bei dieser Ausführungsform nicht ortsfest im Garnknoter 1 befestigt, sondern bewegt sich beim Ausweichen des Garnklemmhebels 14 mit diesem. Durch den Wortlaut "im Wesentlichen" wird diesem Sachverhalt im Rahmen dieser Erfindung Rechnung getragen.

Um die beiden aufeinander folgenden Knoten 3 herzustellen, ohne dabei einen Bindemittelrest für jeden Bindemittelstrang 4.1, 4.2 zu erzeugen, sieht die vorliegende Erfindung vor, dass die Bindemittelstränge 4.1, 4.2 nur einmal zwischen dem ersten und zweiten Knoten 3 durchtrennt werden. Weiterhin sieht die vorliegende Erfindung vor, dass die Garnhaltescheibe 7 beim Fertigstellen des zweiten Knotens 3 angehalten wird, bevor die Bindemittelstränge 4.1, 4.2 die Messerklinge 12 passieren. Da die Garnhaltescheibe 7 bereits vor dem erneuten Passieren der Messerklinge 12 anhält, werden die Bindemittelstränge 4.1, 4.2 beim Herstellen des zweiten Knotens 3 gar nicht durchtrennt. Dadurch fällt auch bei der Herstellung dieses Knotens 3 kein Bindemittelrest pro Bindemittelstrang 4.1, 4.2 an.

Die Herstellung der beiden Knoten 3 mit dem Garnknoter 1 wird im Folgenden anhand der Fig. 2 (a) - (k) schrittweise erläutert.

Fig. 2 (a) zeigt den Garnknoter 1 in der Nullstellung. In der Nullstellung kann ein Knoten 3 sich vom Knoterhaken 5 lösen, wenn auf ihn eine Zugkraft 73 wirkt, die insbesondere vom Erntegutballen 2 hervorgerufen ist, und die eine Erstreckungskomponente gegen eine zweite Raumrichtung 21 aufweist, in die sich ein Schaft 24 (s. Fig. 3 (c) - (e)) des Knoterhakens 5 erstreckt. In der Nullstellung sind weder das Antriebsrad 54 zum Antrieb des Knoterhakens 5 noch der Triebel 55 zum Antrieb der Garnhaltescheibe 7 in Eingriff mit einem ihrer Antriebsmittel 9.1, 9.2, 10.1 auf der Knoterscheibe 8. Der Knoterhaken 5 und die Garnhaltescheibe 7 werden daher in der Nullstellung nicht angetrieben. Der Abstreifhebel 11 befindet sich in der Nullstellung in einer um die Schwenkachse 48 in Schwenkrichtung 49 noch geringfügig ausgeschwenkten Position. Ein Oberfaden 4.1 ist durch die

Obergarnnadel 47 geführt. Dadurch ist eine im Abstreifhebel 11 vorgesehene, insbesondere etwa u- förmige, Aussparung (nicht bezeichnet) unterhalb des Knoterhakens 5 angeordnet.

Fig. 2 (b) zeigt den Garnknoter 1 in einer um einen Drehwinkel von 150° gedrehten Stellung. Auch in dieser Stellung haben sich weder der Knoterhaken 5 noch die Garnhaltescheibe 7 gedreht. Der Abstreifhebel 11 ist gegen die Schwenkrichtung 49 zurückgeschwenkt. Zudem ist die Untergarnnadel 36 in eine Zuführrichtung 50 in den Garnknoter 1 eingeschwenkt. Die Untergarnnadel 36 befindet sich daher in einem Aufwärtsgang. Sie führt den Unterfaden 4.2 mit sich. Außerdem nimmt sie beim Einschwenken in den Garnknoter 1 den Oberfaden 4.1 mit. Oberfaden 4.1 und Unterfaden 4.2 werden beim Einschwenken der Untergarnnadel 36 in die erste Ausnehmung 15.1 der beiden Ausnehmungen 15.1, 15.2 der ersten Paarung 16.1 der Garnhaltescheibe 7 eingelegt. Fig. 2 (b) zeigt die in die erste Ausnehmung 15.1 eingelegten Bindemittelstränge 4.1, 4.2. Das Einlegen erfolgt daher im Aufwärtsgang der Unternadel 36.

Fig. 2 (c) zeigt den Garnknoter 1 in einer um einen Drehwinkel von 185° gedrehten Stellung. In dieser Stellung ist die Garnhaltescheibe 7 soweit gedreht, dass die Bindemittelstränge 4.1, 4.2 in der Halteanordnung zwischen der Garnhaltescheibe 7 und dem Garnklemmhebel 14 verklemmt sind. Der Garnklemmhebel 14 klemmt die Bindemittelstränge 4.1, 4.2 dabei mit der Kraft der Feder.

Zudem befindet sich in dieser Stellung das Antriebsrad 54 in Eingriff mit dem ersten der beiden ersten Antriebsmittel 9.1, 9.2 auf der Knoterscheibe 8, so dass der Knoterhaken 5 von der Knoterscheibe 8 angetrieben wird, und sich um die Knoterhakenachse 44 in die Knoterhakendrehrichtung 43 dreht. Sichtbar ist hier die rückseitig des Knoterhakens 5 angeordnete und zum Antrieb des schwenkbeweglichen Klemmflügels 19 vorgesehene Steuerrolle 46.

Beim Drehen werden die Bindemittelstränge 4.1, 4.2 um den Knoterhaken 5 gewickelt. Dabei entsteht eine Schlaufe (nicht bezeichnet) um den Knoterhaken 5.

Fig. 2 (d) zeigt den Garnknoter 1 in einer um einen Drehwinkel von 205° gedrehten Stellung. In dieser Stellung hat sich der Knoterhaken 5 vollständig um seine Knoterhakenachse 44 gedreht. Dabei wurde die Steuerrolle 46 des Knoterhakens 5 vollständig entlang der Steuerkulisse 63 für das Öffnen und Schließen des schwenkbeweglichen Klemmflügels 19 geführt. Dabei wurden die Bindemittelstränge 4.1, 4.2 zwischen die feststehenden Klemmflügel 18 und den schwenkbeweglichen Klemmflügel 19 eingelegt und liegen vor der Anformung 23 des schwenkbeweglichen Klemmflügels 19.

Die Garnhaltescheibe 7 hat sich zudem soweit gedreht, dass die in der Halteanordnung verklemmten Bindemittelstränge 4.1, 4.2 nun vor einer Schneidkante der Messerklinge 12 angeordnet sind.

Weiterhin ist die Untergarnnadel 36 bereits geringfügig gegen die Zuführrichtung 50 zurückgeschwenkt. Sie befindet sich daher im Abwärtsgang.

Fig. 2 (e) zeigt den Garnknoter 1 in einer um einen Drehwinkel von 220° gedrehten Stellung. In dieser Stellung hat sich die Garnhaltescheibe 7 soweit gedreht, dass die Bindemittelstränge 4.1, 4.2 die Messerklinge 12 passiert haben und von ihr dabei durchtrennt wurden. Die Bindemittelstränge 4.1, 4.2 teilen sich daher nun in erste erntegutballenseitige Bindemittelstränge 4.1, 4.2 und zweite unternadelseitige Bindemittelstränge 4.1, 4.2.

Die unternadelseitigen Bindemittelstränge 4.1, 4.2 wurden beim Weiterdrehen der Garnhaltescheibe 7 zudem in die zweite Ausnehmung 15.2 der ersten Paarung 16.1 von Ausnehmungen 15.1, 15.2 eingelegt. Bei der Herstellung des zweiten Knotens 3 werden die Bindemittelstränge 4.1, 4.2 daher im Abwärtsgang der Unternadel 36 in die Garnhaltescheibe 7 eingelegt.

Fig. 2 (f) zeigt einen vergrößerten Ausschnitt der Fig. 2 (e). Sichtbar sind die um den Knoterhaken 5 gewickelten erntegutballenseitigen Bindemittelstränge 4.1, 4.2 unmittelbar vor dem Abziehen des ersten Knotens 3 vom Knoterhaken 5. Beim Abziehen der Bindemittelstränge 4.1, 4.2 vom Knoterhaken 5 werden die zwischen den feststehenden Klemmflügeln 18 und dem schwenkbeweglichen Klemmflügel 19 eingelegten Bindemittelstränge 4.1, 4.2 mit Hilfe der Anformung 23 am schwenkbeweglichen Klemmflügel 19 durch die um den Knoterhaken 5 gewickelte Schlaufe der Bindemittelstränge 4.1, 4.2 gezogen. Dabei wird der erste Knoten 3 gebildet.

Die Bindemittelstränge 4.1, 4.2 werden beziehungsweise der erste Knoten 3 wird mittels des Abstreifhebels 11 vom Knoterhaken 5 geschoben. Dafür wird die Laufrolle 60 des Abstreifhebels 11 entlang der Abstreifkulisse 45 geführt. Die Abstreifkulisse 45 weist zwei Nocken (nicht bezeichnet) auf, so dass der Abstreifhebel 11 bei einem Umlauf der Knoterscheibe 8 zweimal vorgeschwenkt wird, um dabei jeweils einen Knoten 3 vom Knoterhaken 5 zu schieben. Zum Schieben des Knotens 3 vom Knoterhaken 5 werden die voneinander beabstandeten stiftförmigen Abzieher 53 des Abstreifhebels 11 genutzt.

Damit der Knoten 3 zum Erntegutballen fallen kann, ist im Knoterhaken der Spalt 17 vorgesehen. Der fertige Knoten 3 fällt durch den Spalt 17 zum Erntegutballen.

Fig. 2 (g) zeigt den Garnknoter 1 in einer um einen Drehwinkel von 240° gedrehten Stellung. In dieser Stellung ist der Abstreifhebel 11 in Schwenkrichtung 49 verschwenkt und hat den Knoten 3 vom Knoterhaken 5 geschoben. Die Unternadel 36 ist noch weiter gegen die Zuführrichtung 50 zurückgeschwenkt.

Fig. 2 (h) zeigt den Garnknoter 1 in einer um einen Drehwinkel von 280° gedrehten Stellung. In dieser Stellung befindet sich die Garnhaltescheibe 7 in einer Endposition. Sie wird im Rahmen des aktuellen Umlaufs der Knoterscheibe 8 nicht mehr weiter angetrieben. Die in der Halteanordnung verklemmten Bindemittelstränge 4.1, 4.2 sind dabei unmittelbar vor der Messerklinge 12 angeordnet.

Der Abstreifhebel 11 ist in Fig. 2 (h) gegen die Schwenkrichtung 48 zurückgeschwenkt. Zudem ist die Untergarnnadel 36 bei diesem Drehwinkel gegen die Zuführrichtung 50 zurückgeschwenkt.

Das zweite der ersten Antriebsmittel 9.2 an der Knoterscheibe 8 hat das Antriebsrad 54 des Knoterhakens 5 erreicht. Dadurch gerät das Antriebsrad 54 in Eingriff mit diesem ersten Antriebsmittel 9.2. Der Garnknoter 1 befindet sich somit unmittelbar vor der Bildung des zweiten Knotens 3.

Fig. 2 (i) zeigt den Garnknoter 1 in einer um einen Drehwinkel von 330° gedrehten Stellung. Der Knoterhaken 5 hat die zweite vollständige Drehung um die Knoterhakenachse 44 vollzogen. Es wurde daher eine Schlaufe um den Knoterhaken 5 gebildet und die Bindemittelstränge 4.1, 4.2 zudem unter den schwenkbeweglichen Klemmflügel 19 eingelegt. Die Darstellung zeigt daher den zweiten Knoten 3 unmittelbar vor dem Abschieben durch den Abstreifhebel 11.

Fig. 2 (j) zeigt dies in einem vergrößerten Ausschnitt. Sichtbar ist, dass sich der Abstreifhebel 11 in einer Schwenkbewegung in Schwenkrichtung 49 befindet. Da die Bindemittelstränge 4.1, 4.2 noch in der Halteanordnung verklemmt sind, gerät der am Abstreifhebel 11 befestigte Auszieher 13 in Anlage an die Bindemittelstränge 4.1, 4.2 und zieht die Enden 4.3 der Bindemittelstränge 4.1, 4.2 bei der Schwenkbewegung des Abstreifhebels 11 aus der Halteanordnung. Zudem wird der zweite Knoten 3 analog zum ersten Knoten 3 dabei mittels der stiftförmigen Abzieher 53 vom Knoterhaken 5 geschoben.

Fig. 2 (k) zeigt den Garnknoter 1 in einer um einen Drehwinkel von 360° gedrehten Stellung. Er befindet sich in der Nullstellung (s. Fig. 2 (a)). Der Auszieher 13 hat die Enden 4.3 der Bindemittelstränge 4.1, 4.2 gezogen und die Abzieher 53 haben den zweiten Knoten 3 vom Knoterhaken 5 geschoben. Auch der zweite Knoten 3 fällt gegen die zweite Richtung 21 durch den Spalt 17 im Knoterhaken 5 zum Erntegutballen. Der Abstreifhebel 11 befindet sich in einer Schwenkbewegung gegen die Schwenkrichtung 49.

In Fig. 2 (k) ist die zum Erntegutballen hin gerichtete Zugkraft 73, mit der der Knoten 3 vom Knoterhaken gezogen wird, so dass er von diesem herunterfällt, schematisch dargestellt.

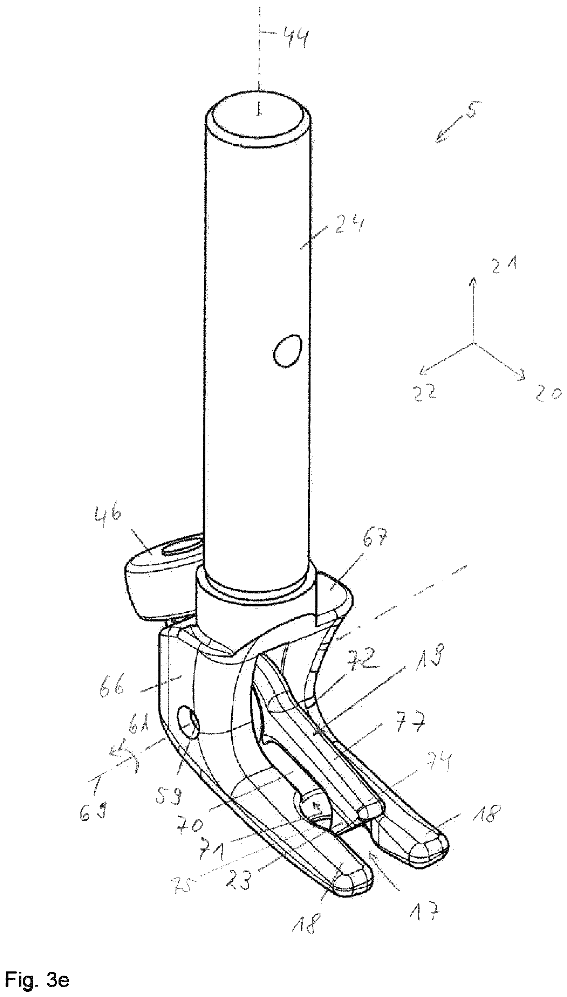

Fig. 3 zeigt in (a) eine vergrößerte Teilansicht des Garnknoters 1 der Fig. 2 (b), in (b) eine Garnhaltescheibe 7 für den Garnknoter 1 aus (a), in (c) einen Knoterhaken 5 für den Garnknoter 1 aus (a) in einer Seitenansicht, in (d) eine Draufsicht auf den Knoterhaken 5 aus (c), und in (e) eine perspektivische Ansicht des Knoterhakens aus (c).

Fig. 3 (b) zeigt eine von vielen möglichen Ausführungsformgen der Garnhaltescheibe 7 in einer Seitenansicht. Die hier dargestellte Garnhaltescheibe 7 ist für die Herstellung von zwei Knotenpaaren 3 ausgebildet. Sichtbar ist eine der Scheiben 7.1 die Garnhaltescheibe 7 mit den zwei Paarungen 16.1, 16.2 von Ausnehmungen 15.1, 15.2. Die Garnhaltescheibe 7 kann aber auch für nur ein Paar Knoten 3, oder für drei oder mehr Knotenpaare 3 ausgebildet sein. Prinzipiell ist es aber auch möglich, die Garnhaltescheibe 7 für eine ungeradzahlige Anzahl von Knoten 3 auszulegen, so dass eine Ausnehmung 15.1, 15.2 der Garnhaltescheibe 7 abwechselnd für die Herstellung des ersten der beiden Knoten 3 und dann für die Herstellung des zweiten der beiden Knoten 3 genutzt wird.

Bei der dargestellten Garnhaltescheibe 7 ist zwischen den Ausnehmungen eines Knotenpaares 3 jeweils ein Versatzwinkel α von 100° vorgesehen. Bei der gewählten Untersetzung zwischen der Knoterscheibe 8 und der Garnhaltescheibe 7 ist ein Versatzwinkel α von größer 90° erforderlich, um in die zweite der beiden Ausnehmungen 15.2 die Bindemittelstränge 4.1, 4.2 einlegen zu können. Der Versatzwinkel α kann aber auch deutlich größer als 90° sein, und insbesondere bis zu ca. 150° betragen.

Zwischen den beiden Paaren 16.1, 16.2 von Ausnehmungen 15.1, 15.2 ist hier ein Ergänzungswinkel β von 80° vorgesehen. Dadurch ergibt sich eine drehsymmetrische Anordnung der Paare 16.1, 16.2 von Ausnehmungen 15.1, 15.2.

Fig. 3 (c) zeigt den Knoterhaken 5 für den Garnknoter 1 in einer Seitenansicht, Fig. 3 (d) in einer Draufsicht von oben, und Fig. 3 (e) in einer perspektivischen Ansicht. Der Knoterhaken weist hier zwei feststehende Klemmflügel 18 auf. Zudem weist er einen schwenkbeweglichen Klemmflügel 19 auf. Die Klemmflügel 18, 19 weisen eine Erstreckungskomponente in eine selbe erste Raumrichtung 20 auf. Es ist auch eine Ausführungsform eines Knoterhakens 5 verwendbar, der nur einen feststehenden Klemmflügel 18 und den schwenkbeweglichen Klemmflügel 19 aufweist.

Die feststehenden Klemmflügel 18 erstrecken sich von einem Rumpf 66 des Knoterhakens 5 ausgehend zu einem freien Ende (nicht bezeichnet) hin. Der schwenkbewegliche Klemmflügel 19 ist hingegen in einem Schwenkflügellager 59, das im Rumpf 66 des Knoterhakens 5 vorgesehen ist, um eine Flügelschwenkachse 69 in und gegen eine Flügelschwenkrichtung 61 schwenkbar gelagert. Auch der schwenkbewegliche Klemmflügel 19 weist ein freies Ende 74 auf.

Der schwenkbewegliche Klemmflügel 19 weist eine Anformung 23 auf, die in Richtung zum feststehenden Klemmflügel 18 hin erhaben ist. Die Anformung erstreckt sich daher gegen die zweite Raumrichtung 21. Sie ist hier am freien Ende 74 des schwenkbeweglichen Klemmflügels 19 angeordnet. Prinzipiell kann sich der schwenkbewegliche Klemmflügel 19 aber auch über die Anformung 23 hinaus zu seinem freien Ende 74 hin erstrecken. Die Anformung 19 erstreckt sich dafür zudem in einem im Wesentlichen rechten Winkel δ zu einem Schwenkflügel 77 des schwenkbeweglichen Flügels 19, an dem sie angeordnet ist. Sie ist hakenförmig, hier dreieckförmig, ausgebildet.

Der schwenkbewegliche Klemmflügel 19 ist hier zu beiden feststehenden Klemmflügeln 18 jeweils wenigstens zum freien Ende der Klemmflügel 18, 19 hin in einer dritten Raumrichtung 22, die sich quer zur ersten Raumrichtung 20 und quer zur zweiten Raumrichtung 21 erstreckt, seitenversetzt angeordnet. Dabei sind die feststehenden Klemmflügel 18 spiegelsymmetrisch zu einer sich mittig durch den schwenkbeweglichen Klemmflügel 19 erstreckenden fiktiven Linie (nicht gezeigt) angeordnet. Die feststehenden Klemmflügel 18 weisen dabei dieselbe Länge LF auf. Zudem ist der schwenkbewegliche Klemmflügel 19 kürzer als die feststehenden Klemmflügel 19 vorgesehen.

Weiterhin sind die beiden feststehenden Klemmflügel 18 hier zumindest endseitig voneinander beabstandet, so dass zwischen ihnen ein Spalt 17 ausgebildet ist. Zudem ist der schwenkbewegliche Klemmflügel 19 in einer Draufsicht zumindest endseitig zwischen den beiden feststehenden Klemmflügeln 18 angeordnet. Dadurch ist die Anformung 23 jeweils seitlich der beiden feststehenden Klemmflügel 18 zwischen diesen positioniert. Der Spalt 17 erstreckt sich zwischen den feststehenden Klemmflügeln 18 und unterhalb des schwenkbeweglichen Klemmflügels 19 gegen die erste Raumrichtung 20 noch über die Anformung 23 hinaus. Dadurch ist nicht nur unterhalb sondern zudem gegen die erste Raumrichtung 20 gesehen hinter der Anformung 23 ein Freiraum vorgesehen, durch den ein mit dem Knoterhaken 5 fertiggestellter Knoten 3, insbesondere wenn auf ihn eine Zugkraft 73 gegen die zweite Raumrichtung 21 wirkt, in diese Richtung 21 herabfallen kann.

Der schwenkbewegliche Klemmflügel 19 ist hier daher zu den feststehenden Klemmflügeln 18 in eine zweiten Raumrichtung 21, die sich quer zur ersten Raumrichtung 20 erstreckt, nur bereichsweise höhenversetzt angeordnet. Dadurch greift die Anformung 23 in den Spalt 17 zwischen die feststehenden Klemmflügel 18 geringfügig ein.

Prinzipiell kann der Spalt 17 u- oder v- förmig ausgebildet sein. Es hat sich aber eine etwa schlüssellochartige Aufweitung 75 des Spaltes 17 als vorteilhaft erwiesen, wobei dadurch der Spalt 17 an einem dem Schwenkflügellager 59 zugewandten Ende aufgeweitet ist. Dadurch steht den Bindemittelsträngen 4.1, 4.2 mehr Raum zur Verfügung und der Knoten 3 kann sich leichter und schneller vom Knoterhaken 5 lösen.

Der schenkbewegliche Klemmflügel 19 kann durch Verschwenken in Flügelschwenkrichtung 61 von einem ungeöffneten Zustand in einen geöffneten Zustand verschwenkt werden. Im geöffneten Zustand ist das freies Ende 74 des schwenkbeweglichen Klemmflügels 19 weiter von den feststehenden Klemmflügeln 18 beabstandet als im ungeöffneten Zustand. Im geöffneten Zustand sind die Bindemittelstränge 4.1, 4.2 zwischen die feststehenden und den schwenkbeweglichen Klemmflügel 18, 19 einlegbar. Die Anformung 23 ist dafür vorgesehen, die zwischen die feststehenden und den schwenkbeweglichen Klemmflügel 18, 19 eingelegten Bindemittelstränge 4.1, 4.2 durch eine aus den Bindemittelsträngen 4.1, 4.2 gebildete Bindemittelschlaufe, die um den Rumpf 66 des Knoterhakens 5 geschlungen ist, zu ziehen. Dafür wird der schwenkbewegliche Klemmflügel 19 geschlossen und die Bindemittelstränge 4.1, 4.2 zwischen den feststehenden und dem schwenkbeweglichen Klemmflügel 18, 19 verklemmt.

Um das Verschwenken des schwenkbeweglichen Klemmflügels 19 zu bewerkstelligen, ist an einem dem freien Ende 74 des schwenkbeweglichen Klemmflügels 19 gegenüberliegenden Ende eine Steuerrolle 46 vorgesehen. Die Steuerrolle 46 ist an einer dem freien Ende abgewandten Seite (nicht bezeichnet) des Schwenkflügellagers 59 angeordnet. Daher wird der schwenkbewegliche Klemmflügel 19 bei einem Verstellen der Steuerrolle 46 vom ungeöffneten in den geöffneten Zustand oder zurück verschwenkt.

Im Garnknoter 1 wird die Steuerrolle 46 entlang einer Steuerkulisse 63 (s. Fig. 3 (a)) geführt, die ortsfest am Knoterrahmen 6 angeordnet ist. Die Steuerkulisse 46 ermöglicht für jeden der Knoten 3 jeweils ein einmaliges Öffnen vom ungeöffneten in den geöffneten Zustand und Schließen vom geöffneten in den ungeöffneten Zustand des schwenkbeweglichen Klemmflügels 19.

Die Stabilität des Knoterhakens 5 wird erhöht, indem der Rumpf 66 sich unterhalb des schenkbeweglichen Klemmflügels 19 erstreckt. Eine Länge LS des Spaltes 17 oder eine Länge LK der feststehenden Klemmflügel 18 verhält sich zu einer Länge LR des Rumpfes 66 in einem Haltebereich 68 des Knoterhakens 5, der zum Verklemmen von Bindemittelsträngen 4.1, 4.2 zwischen den feststehenden Klemmflügeln 18 und dem schwenkbeweglichen Klemmflügel 19 vorgesehen ist, bevorzugt wenigstens im Verhältnis 1:1 oder größer, vorzugsweise 2:1 oder 3:1 oder noch größer. Der sich unterhalb des schwenkbeweglichen Klemmflügels 19 erstreckende Rumpf 66 ist daher im Verhältnis zum Spalt 17 beziehungsweise den Klemmflügeln 18, 19 nur sehr kurz ausgebildet. Vorzugsweise dient der Rumpf 66 dort lediglich der Stabilisierung des Knoterhakens 5. Je kürzer der Rumpf 66 sich unterhalb des schwenkbeweglichen Klemmflügels 19 erstreckt, umso größer ist der Spalt 17 und umso leichter können Knoten 3, insbesondere aus verhältnismäßig dickem Bindematerial, am Ende des Knotenvorgangs vom Knoterhaken 5 gezogen werden.

Der sich im Haltebereich 68 unterhalb des schenkbeweglichen Klemmflügels 19 erstreckende Rumpf 66 weist zudem hier eine Vertiefung 70 auf, die den zwischen dem schwenkbeweglichen Klemmflügel 19 und den feststehenden Klemmflügeln 18 verklemmten Bindemittelsträngen 4.1, 4.2 Raum gibt. Um die Bindemittelstränge 4.1, 4.2 nicht aufzureiben, kann die Vertiefung 70 abgerundet sein.

Um das Ziehen des Knotens 3 vom Knoterhaken 5 noch weiter zu erleichtern, ist es weiterhin bevorzugt, dass sich eine Stirnwand 71 des Spaltes 17 im Wesentlichen in die zweite Raumrichtung 21 erstreckt, so dass ein fertig gestellter Knoten 3 nicht an der Stirnwand 71 oder einer Kante (nicht bezeichnet) der Stirnwand 71 hängen bleibt, oder sich aufreibt.

Der schwenkbewegliche Klemmflügel 19 ist insgesamt schmaler als der Spalt 17 ausgebildet. Diese Ausführungsform ist beim Durchziehen der Bindemittelstränge 4.1, 4.2 durch die Bindemittelschlaufe sowie beim Abstreifen des Knotens 3 vom Knoterhaken 5 vorteilhaft.

Um den Knoterhaken 5 im Garnknoter 1 drehbar zu befestigen, weist dieser einen Schaft 24 für eine Lagerung im Garnknoter 1 auf. Der Schaft 24 ist gegenüber den feststehenden Klemmflügeln 18 in einem Winkel γ angeordnet. Da die Bindemittelschlaufe für den Knoten 3 eine volle Umdrehung des Knoterhakens 5 um die Knoterhakenachse 44 erfordert, wird im Garnknoter 1 für den Knoterhaken 5 ein Freiraum (nicht bezeichnet) benötigt, der einer Länge (nicht bezeichnet) der feststehenden Klemmflügel 18 entspricht. Die winkelige Anordnung der Klemmflügel 18 zum Schaft 24 ist daher platzsparend.

Der dafür erforderliche Knick 72 im Rumpf 66 ist abgerundet ausgebildet, so dass der Rumpf 66 im Knick 72 keine Kanten aufweist und die Bindemittelstränge 4.1, 4.2 sich nicht am Knick 72 aufreiben können.

Das Bilden der Bindemittelschlaufe um den Rumpf 66 des Knoterhakens 5 wird durch eine rampenförmige Verbreiterung 67 des Rumpfes 66 unterhalb des Schaftes 24 erleichtert, durch die sich die Bindemittelschlaufe beim Drehen des Knoterhakens 5 unterhalb der Steuerrolle 46 um den Rumpf 66 wickelt.

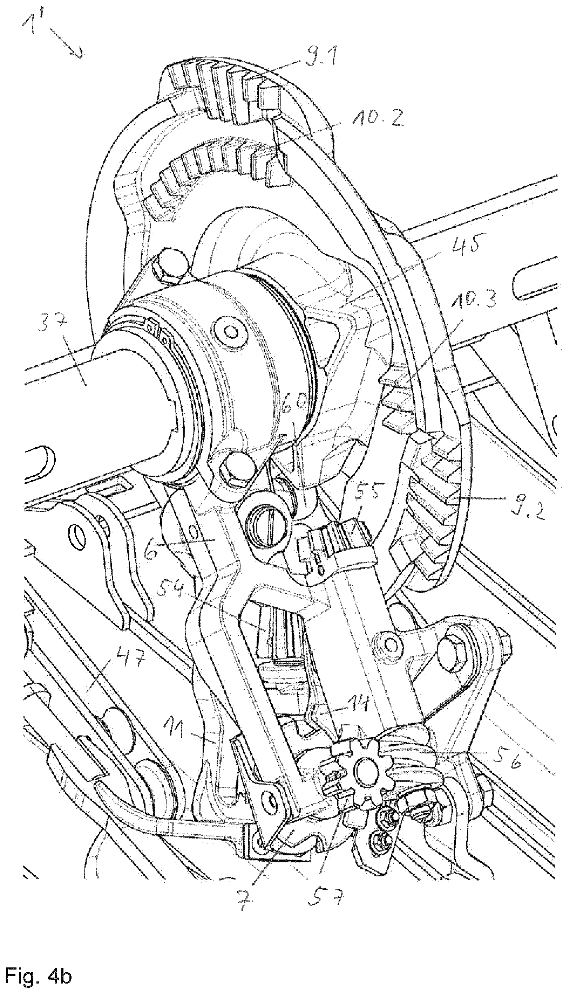

Fig. 4 zeigt in (a) eine weitere perspektivische Ansicht des Garnknoters 1 der Fig. 2, und in (b) eine perspektivische Ansicht einer weiteren Ausführungsform eines Garnknoters 1' für die Knoteranordnung 34 der Fig. 1 (b).

Der Bindevorgang des Garnknoters 1 der Fig. 4 (a) umfasst zum Herstellen der beiden Knoten 3 folgende Schritte:
a. Einlegen der Bindemittelstränge 4.1, 4.2 in die erste Ausnehmung 15.1 des ersten Paares 16.1 von Ausnehmungen 15.1, 15.2 an der Garnhaltescheibe 7 im Aufwärtsgang der Unternadel 36;
b. Drehung der Garnhaltescheibe 7 und dabei Verklemmen der Bindemittelstränge 4.1, 4.2;
c. Während der Drehung der Garnhaltescheibe 7 Drehung des Knoterhakens 5, wobei der schwenkbewegliche Klemmflügel 19 einmal vom ungeöffneten in den geöffneten Zustand und zurück verschwenkt wird, um die Bindemittelstränge 4.1, 4.2 zwischen die feststehenden und den schwenkbeweglichen Klemmflügel 18, 19 zu legen;
d. Während der Drehung der Garnhaltescheibe 7 Einlegen der Bindemittelstränge 4.1, 4.2 in die zweite Ausnehmung 15.2 der beiden Ausnehmungen 15.1, 15.2 des Paares 16.1 beim Abwärtsgang der Unternadel 36;
e. Beim Weiterdrehen der Garnhaltescheibe 7 Passieren der Messerklinge 12, wobei die Bindemittelstränge 4.1, 4.2 durch die Messerklinge 12 durchtrennt werden;
f. Verschwenken des Abstreifhebels 11 zum Abstreifen des ersten Knotens 3 vom Knoterhaken 5;
g. Anhalten der Garnhaltescheibe 7, wenn die Bindemittelstränge 4.1, 4.2 vor der Schneidkante der Messerklinge 12 angekommen sind;
h. Drehung des Knoterhakens 5 analog zu (c);
i. Verschwenken des Abstreifhebels 11 zum Ausziehen der Enden 4.3 der Bindemittelstränge 4.1, 4.2 mit dem Auszieher 13 des Abstreifhebels 11 aus der Halteanordnung und zum Abstreifen des zweiten Knotens 3 vom Knoterhaken 5;
j. Herausziehen des Knotens 3 aus dem Garnknoter 1 bei Zug auf den Knoten 3 gegen die zweite Richtung 21, insbesondere hervorgerufen durch Vorschub des Erntegutballens 2.

Das Verfahren zur Bildung der zwei aufeinander folgenden Knoten 3 umfasst daher die wesentlichen Merkmale, dass zwischen dem ersten und dem zweiten Knoten 3 die Bindemittelstränge 4.1, 4.2 durchtrennt werden, und dass die Garnhaltescheibe 7 angehalten wird, bevor die Bindemittelstränge 4.1, 4.2 bei der Herstellung des zweiten Knotens 3 die Messerklinge 12 passieren.

Die Ausführungsform des Garnknoters 1' der Fig. 4 (b) weist nicht nur ein einziges zweites Antriebsmittel 10.1 zum Antrieb der Garnhaltescheibe 7 auf, sondern zwei zweite Antriebsmittel 10.1, 10.2. Auch das zweite der beiden zweiten Antriebsmittel 10.1, 10.2 ist als ein Zahnsegment ausgeführt.

Bei der hier vorgesehenen Garnhaltescheibe 7 dreht sich der Garnknoter 1' analog zur Ausführungsform der Fig. 4 (a) pro Knotenpaar 3 um 180°. Durch das erste der beiden zweiten Antriebsmittel 10.1 wird bei dieser Ausführungsform des Garnknoters 1' jedoch ein Drehwinkel der Garnhaltescheibe 7 während der Bildung des ersten Knotens 3 von 135° durchlaufen. Dabei führt die Garnhaltescheibe 7 die Bindemittelstränge 4.1, 4.2 entlang der Messerklinge 12, so dass sie durchtrennt werden. Während der Herstellung des zweiten Knotens 3 dreht sich die Garnhaltescheibe 7 um den noch fehlenden Drehwinkel von 45°. Dafür ist das zweite der beiden zweiten Antriebsmittel 10.2 vorgesehen. Die Bindemittelstränge 4.1, 4.2 werden anschließend von der Halteanordnung oberhalb einer Schneidkante der Messerklinge 12 gehalten und nicht geschnitten.

Daher umfasst das Verfahren zur Bildung der zwei aufeinander folgenden Knoten 3 auch bei dieser Ausführungsform des Garnknoters 1' die wesentlichen Merkmale, dass zwischen dem ersten und dem zweiten Knoten 3 die Bindemittelstränge 4.1, 4.2 durchtrennt werden, und dass die Garnhaltescheibe 7 angehalten wird, bevor die Bindemittelstränge 4.1, 4.2 bei der Herstellung des zweiten Knotens 3 die Messerklinge 12 passieren.

Bei der Ausführungsform der Fig. 4 (b) entspricht die Länge der Bindemittelstränge 4.1, 4.2, die zwischen der Herstellung des ersten Knotens 3 und der Herstellung des zweiten Knotens 3 von der Halteanordnung rückseitig der Garnhaltescheibe 7 gehalten wird, dem Drehwinkel, den die Garnhaltescheibe 7 bei Antrieb durch das erste der beiden zweiten Antriebsmittel 10.1 durchläuft, bevor die Bindemittelstränge 4.1, 4.2 geschnitten werden. Dieser Drehwinkel beträgt hier 135°. Demgegenüber durchläuft die Garnhaltescheibe 7 bei der Ausführungsform des Garnknoters 1 der Fig. 4 (a) lediglich einen Drehwinkel von 100°, bevor die Bindemittelstränge 4.1, 4.2 geschnitten werden. Die in der Halteanordnung zur Bildung des zweiten Knotens 3 gehaltenen Enden 4.3 der Bindemittelstränge 4.1, 4.2 sind bei der Ausführungsform des Garnknoters 1' der Fig. 4 (b) daher länger als die bei der Ausführungsform des Garnknoters 1 der Fig. 4 (a). Um Bindematerial einzusparen, hat sich die Ausführungsform der Fig. 4 (a) gegenüber der der Fig. 4 (b) daher als vorteilhaft erwiesen.

Gegenüber dem oben beschriebenen Bindevorgang des Garnknoters 1 der Fig. 4 (a) umfasst das Herstellen der beiden Knoten 3 beim Garnknoter 1' der Fig. 4 (b) daher die Schritte:
a. Einlegen der Bindemittelstränge 4.1, 4.2 in die erste Ausnehmung 15.1 des ersten Paares 16.1 von Ausnehmungen 15.1, 15.2 an der Garnhaltescheibe 7 im Aufwärtsgang der Unternadel 36;
b. Drehung der Garnhaltescheibe 7 und Verklemmen der Bindemittelstränge 4.1, 4.2;
c. Während der Drehung der Garnhaltescheibe 7 Drehung des Knoterhakens 5, wobei der schwenkbewegliche Klemmflügel 19 einmal vom ungeöffneten in den geöffneten Zustand und zurück verschwenkt wird, um die Bindemittelstränge 4.1, 4.2 zwischen die feststehenden und den schwenkbeweglichen Klemmflügel 18, 19 zu legen;
d. Weiterdrehen der Garnhaltescheibe 7, wobei die Bindemittelstränge 4.1, 4.2 die Messerklinge 12 passieren und dabei durchtrennt werden;
e. Verschwenken des Abstreifhebels 11 zum Abstreifen des ersten Knotens 3 vom Knoterhaken 5;
f. Anhalten der Garnhaltescheibe 7;
g. Einlegen der Bindemittelstränge 4.1, 4.2 in die zweite Ausnehmung 15.2 der beiden Ausnehmungen 15.1, 15.2 des Paares 16.1 beim Abwärtsgang der Unternadel 36;
h. Weiterdrehen der Garnhaltescheibe 7;
i. Drehung des Knoterhakens 5 analog zu (c);
j. Ausziehen der Enden der Bindemittelstränge 4.3 mit dem Auszieher 13 des Abstreifhebels 11 aus der Halteanordnung und Abstreifen des zweiten Knotens 3 vom Knoterhaken 5;
k. Herausziehen des Knotens 3 aus dem Garnknoter 1 bei Zug auf den Knoten 3 gegen die zweite Richtung 21, insbesondere hervorgerufen durch Vorschub des Erntegutballens 2.

## Patentansprüche

1. Doppelknoter (1) für eine Ballenpresse (25) zur Bildung von zwei aufeinander folgenden Knoten (3) zum Zusammenhalten eines, einen Erntegutballen (2) umgebenden Bindemittels (4.1, 4.2),
• mit einem Knoterhaken (5) zum Verknoten der Enden des Bindemittels (4.1, 4.2), der drehbar in einem Knoterrahmen (6) gelagert ist,
• mit einer Halteanordnung, die eine Garnhaltescheibe (7) umfasst, wobei die Garnhaltescheibe (7) am Knoterrahmen (6) drehbar gelagert ist und zum zeitweisen Fördern zweier Bindemittelstränge (4.1, 4.2) des Bindemittels vorgesehen ist,
• mit einer umlaufend antreibbaren Knoterscheibe (8), an der für jeden der Knoten (3) jeweils erste Antriebsmittel (9.1, 9.2) zum Antrieb des Knoterhakens (5) angeordnet sind, und an der wenigsten ein zweites Antriebsmittel (10.1) zum Antrieb der Garnhaltescheibe (7) angeordnet sind,
• mit einem Abstreifhebel (11) zum Abstreifen der Knoten (3) vom Knoterhaken (5), und
• mit einer Messerklinge (12) zum Durchtrennen der Bindemittelstränge (4.1, 4.2), die im Garnknoter (1) gehaltert ist,
**dadurch gekennzeichnet, dass**
die Garnhaltescheibe (7) beim Drehen oder durch Drehen entlang der im Wesentlichen ortsfest im Doppelknoter (1) angeordneten Messerklinge (12) geführt wird, so dass die Bindemittelstränge (4.1, 4.2) beim Passieren der Messerklinge (12) durchtrennt oder geschnitten werden, wobei das wenigstens eine zweite Antriebsmittel (10.1) derart ausgebildet ist, dass die Garnhaltescheibe (7) vor dem Fertigstellen des zweiten Knotens (3) angehalten wird, bevor die Bindemittelstränge (4.1, 4.2) die Messerklinge (12) passieren, sodass der Bindevorgang so erfolgt, dass lediglich ein einziger Schnitt der Bindemittelstränge (4.1, 4.2) zwischen der Herstellung des ersten und des zweiten Knotens (3) erfolgt.

2. Doppelknoter (1) nach Anspruch 1, **dadurch gekennzeichnet, dass** die Garnhaltescheibe angehalten wird, bevor ein zweiter Schnitt kurz vor der Fertigstellung des zweiten Knotens erfolgt.

3. Doppelknoter (1) nach Anspruch 1 oder 2, **dadurch gekennzeichnet, dass** am Abstreifhebel (11) ein Auszieher (13) zum Ausziehen des Bindemittels (4.1, 4.2) vorgesehen ist.

4. Doppelknoter (1) nach zumindest einem der Ansprüche 1 bis 3, **dadurch gekennzeichnet, dass** die Halteanordnung einen Garnklemmhebel (14) umfasst, wobei der Garnklemmhebel (14) mit der Garnhaltescheibe (7) zusammenwirkt, um die Bindemittelstränge (4.1, 4.2) in einer Ausnehmung (15.1, 15.2) der Garnhaltescheibe (7) fest zu halten.

5. Doppelknoter (1) nach Anspruch 4, **dadurch gekennzeichnet, dass** die Messerklinge (12) am Garnklemmhebel (14) befestigt ist.

6. Doppelknoter (1) nach zumindest einem der Ansprüche 1 bis 4, **dadurch gekennzeichnet, dass** die Messerklinge (12) am Knoterrahmen (6) befestigt ist.

7. Doppelknoter (1) nach zumindest einem der Ansprüche 1 bis 6, **dadurch gekennzeichnet, dass** die Garnhaltescheibe (7) an ihrer Außenkontur eine erste Paarung (16.1) von zumindest zwei Ausnehmungen (15.1, 15.2) aufweist, die in Bezug auf eine Drehbewegung der Garnhaltescheibe (7) in Drehrichtung (41) um eine Garnhaltescheibenachse (42) um einen Versatzwinkel (a) größer 90° entgegen der Uhrzeigerrichtung verdreht zueinander angeordnet sind.

8. Doppelknoter (1) nach zumindest einem der Ansprüche 1 bis 6, **dadurch gekennzeichnet, dass** zwei Paarungen (16.1, 16.2) von Ausnehmungen (15.1, 15.2) an der Garnhaltescheibe (7) angebracht sind.

9. Doppelknoter (1) nach Anspruch 8, **dadurch gekennzeichnet, dass** die Paarungen (16.1, 16.2) von Ausnehmungen (15.1, 15.2) an der Garnhaltescheibe (7) um 180° verdreht zueinander angeordnet sind.

10. Doppelknoter (1) nach zumindest einem der Ansprüche 1 bis 9, **dadurch gekennzeichnet, dass** zum Antrieb der Garnhaltescheibe (7) zwei zweite Antriebsmittel (10.2, 10.3) vorgesehen sind, welche als an der Knoterscheibe (8) angebrachte Zahnsegmente (10.2, 10.3) ausgebildet sind.

11. Doppelknoter (1) nach zumindest einem der Ansprüche 1 bis 10, **dadurch gekennzeichnet, dass** der Knoterhaken (5) einen Spalt (17) aufweist.

12. Ballenpresse mit einer Mehrzahl von Doppelknotern (1) nach zumindest einem der Ansprüche 1 bis 11.

13. Verfahren zur Bildung von zwei aufeinander folgenden Knoten (3) zum Zusammenhalten eines, einen Erntegutballen (2) umgebenden Bindemittels (4.1, 4.2), mit einem Doppelknoter nach einem der Ansprüche 1 bis 11, wobei zwischen dem ersten und zweiten Knoten (3) die Bindemittelstränge (4.1, 4.2) durchtrennt werden,
**dadurch gekennzeichnet, dass**
das wenigstens eine zweite Antriebsmittel (10.1) derart ausgebildet ist, dass die Garnhaltescheibe (7) vor dem Fertigstellen des zweiten Knotens (3) angehalten wird, bevor die Bindemittelstränge (4.1, 4.2) die Messerklinge (12) passieren.

## Claims

1. Double knotter (1) for a baler (25) for forming two successive knots (3) in order to hold together a binding agent (4.1, 4.2) surrounding a crop bale (2), comprising
• a knotting hook (5) for knotting the ends of the binding agent (4.1, 4.2), which is rotatably mounted in a knotting frame (6),
• a holding arrangement having a twine holding disk (7), the twine holding disk (7) being rotatably mounted on the knotting frame (6) and being provided for temporarily conveying two binding agent strands (4.1, 4.2) of the binding agent,
• a rotatingly drivable knotting disk (8), on which first drive means (9.1, 9.2) for driving the knotting hook (5) are arranged for each of the knots (3), and on which at least one second drive means (10.1) for driving the twine holding disk (7) are arranged,
• a stripping lever (11) for stripping the knots (3) from the knotting hook (5), and
• a knife blade (12) for severing the binding agent strands (4.1, 4.2), which blade is held in the twine knotter (1),
**characterized in that**
the twine holding disk (7) is guided during rotation or by rotation along the knife blade (12) arranged substantially stationary in the double knotter (1), so that the binding agent strands (4.1, 4.2) are severed or cut as they pass the knife blade (12), the at least one second drive means (10.1) being designed such that the twine holding disk (7) is stopped before the second knot (3) is completed, before the binding agent strands (4.1, 4.2) pass the knife blade (12), so that the binding process takes place such that only a single cut of the binding agent strands (4.1, 4.2) takes place between the production of the first and the second knot (3).

2. Double knotter (1) according to claim 1, **characterized in that** the twine holding disk is stopped before a second cut is made shortly before the second knot is completed.

3. Double knotter (1) according to either claim 1 or claim 2,
**characterized in that** an extractor (13) for extracting the binding agent (4.1, 4.2) is provided on the stripping lever (11).

4. Double knotter (1) according to at least one of claims 1 to 3, **characterized in that** the holding arrangement comprises a twine clamping lever (14), the twine clamping lever (14) cooperating with the twine holding disk (7) in order to firmly hold the binding agent strands (4.1, 4.2) in a recess (15.1, 15.2) of the twine holding disk (7).

5. Double knotter (1) according to claim 4, **characterized in that** the knife blade (12) is fastened to the twine clamping lever (14).

6. Double knotter (1) according to at least one of claims 1 to 4, **characterized in that** the knife blade (12) is fastened to the knotting frame (6).

7. Double knotter (1) according to at least one of claims 1 to 6, **characterized in that** the twine holding disk (7) has, on the outer contour thereof, a first pairing (16.1) of at least two recesses (15.1, 15.2) which are arranged rotated counterclockwise relative to one another by an offset angle (a) greater than 90° with respect to a rotational movement of the twine holding disk (7) in the direction of rotation (41) about a twine holding disk axis (42).

8. Double knotter (1) according to at least one of claims 1 to 6, **characterized in that** two pairs (16.1, 16.2) of recesses (15.1, 15.2) are attached to the twine holding disk (7).

9. Double knotter (1) according to claim 8, **characterized in that** the pairs (16.1, 16.2) of recesses (15.1, 15.2) on the twine holding disk (7) are arranged rotated by 180° relative to one another.

10. Double knotter (1) according to at least one of claims 1 to 9, **characterized in that** two second drive means (10.2, 10.3) are provided for driving the twine holding disk (7), which drive means are designed as toothed segments (10.2, 10.3) attached to the knotting disk (8).

11. Double knotter (1) according to at least one of claims 1 to 10, **characterized in that** the knotting hook (5) has a gap (17).

12. Baler comprising a plurality of double knotters (1) according to at least one of claims 1 to 11.

13. Method for forming two successive knots (3) in order to hold together a binding agent (4.1, 4.2) surrounding a crop bale (2), comprising a double knotter according to any of claims 1 to 11, the binding agent strands (4.1, 4.2) being severed between the first and second knots (3),
**characterized in that**
the at least one second drive means (10.1) is designed such that the twine holding disk (7) is stopped before the second knot (3) is completed, before the binding agent strands (4.1, 4.2) pass the knife blade (12).

## Revendications

1. Double noueur (1) d'une presse (25) à balles pour la formation de nœuds (3) successifs de maintien d'un agent (4.1, 4.2) de liage entourant une balle (2) de récolte,
• comprenant un crochet (5) de nouage pour nouer les bouts de l'agent (4.1, 4.2) de liage, qui est monté tournant dans un cadre (6) de noueur,
• comprenant un agencement de maintien, qui comprend un disque (7) de maintien de fil, dans lequel le disque (7) de maintien de fil est monté tournant sur le cadre (6) de noueur et est prévu pour transporter de temps à autre deux cordons (4.1, 4.2) de l'agent de liage,
• comprenant un disque (8) de noueur pouvant être entraîné en tournant, sur lequel sont montés pour chacun des nœuds (3) respectivement un premier moyen (9.1, 9.2) d'entraînement pour l'entraînement du crochet (5) de noueur et au moins un deuxième moyen (10.1) d'entraînement pour l'entraînement du disque (7) de maintien de fil,
• comprenant un levier (11) d'enlèvement pour enlever les nœuds (3) du crochet (5) de noueur, et
• comprenant une lame (12) de couteau pour séparer les cordons (4.1, 4.2) d'agent de liage, qui est maintenue dans le noueur (1) de fil,
**caractérisé en ce que**
le disque (7) de maintien de fil est guidé lors de la rotation ou par la rotation, le long de la lame (12) de couteau montée sensiblement fixe en position dans le double noueur (1), de manière à ce que les cordons (4.1, 4.2) d'agent de liage soient, lors du passage de la lame (12) du couteau, séparés ou coupés, dans lequel le au moins un deuxième moyen (10.1) d'entraînement est constitué de manière à arrêter le disque (7) de maintien de fil avant la finition de deuxième nœud (3), avant que les cordons (4.1, 4.2) d'agent de liage ne passent devant la lame (12) du couteau, de manière à ce que l'opération de liage s'effectue de façon à effectuer seulement une seule coupe des cordons (4.1, 4.2) d'agent de liage entre la production du premier et du deuxième nœuds (3).

2. Double noueur (1) suivant la revendication 1, **caractérisé en ce que** le disque de maintien de fil est arrêté avant d'effectuer une deuxième coupe peu avant la finition du deuxième nœud.

3. Double noueur (1) suivant la revendication 1 ou 2, **caractérisé en ce qu'**il est prévu sur le levier (11) d'enlèvement un extracteur (13) pour extraire l'agent (4.1, 4.2) de liage.

4. Double noueur (1) suivant au moins l'une des revendications 1 à 3, **caractérisé en ce que** l'agencement de maintien comprend un levier (14) de serrage de fil, dans lequel le levier (14) de serrage de fil coopère avec le disque (7) de maintien de fil, afin de bien maintenir les cordons (4.1, 4.2) d'agent de liage dans un évidement (15.1, 15.2) du disque (7) de maintien de fil.

5. Double noueur (1) suivant la revendication 4, **caractérisé en ce que** la lame (12) de couteau est fixée au levier (14) de serrage de fil.

6. Double noueur (1) suivant au moins l'une des revendications 1 à 4, **caractérisé en ce que** la lame (12) de couteau est fixée au cadre (6) de noueur.

7. Double noueur (1) suivant au moins l'une des revendications 1 à 6, **caractérisé en ce que** le disque (7) de maintien de fil a sur son contour extérieur un premier appariement (16.1) d'au moins deux évidements (15.1, 15.2), qui, par rapport à un mouvement de rotation du disque (7) de maintien de fil, sont disposés, dans le sens (41) de rotation autour d'un axe (42) du disque de maintien de fil, en étant tournés l'un par rapport à l'autre d'un angle (a) de décalage plus grand que 90° dans le sens contraire au sens des aiguilles d'une montre.

8. Double noueur (1) suivant au moins l'une des revendications 1 à 6, **caractérisé en ce que** deux appariements (16.1, 16.2) d'évidements (15.1, 15.2) sont ménagés sur le disque (7) de maintien de fil.

9. Double noueur (1) suivant la revendication 8, **caractérisé en ce que** les appariements (16.1, 16.2) d'évidements (15.1, 15.2) sont disposés en étant décalés de 180° l'un par rapport à l'autre sur le disque (7) de maintien de fil.

10. Double noueur (1) suivant au moins l'une des revendications 1 à 9, **caractérisé en ce qu'**il est prévu pour l'entraînement du disque (7) de maintien de fil deux deuxièmes moyens (10.2, 10.3) d'entraînement, qui sont constitués sous la forme de segments (10.2, 10.3) dentés ménagés sur le disque (8) de noueur.

11. Double noueur (1) suivant au moins l'une des revendications 1 à 10, **caractérisé en ce que** le crochet (5) de noueur a un intervalle (17).

12. Presse à balles comprenant une pluralité de doubles noueurs (1) suivant au moins l'une des revendications 1 à 11.

13. Procédé de formation de deux nœuds (3) successifs pour le maintien d'un agent (4.1, 4.2) de liage entourant une balle (2) de récolte par un double noueur suivant l'une des revendications 1 à 11, dans lequel on sépare les cordons (4.1, 4.2) d'agent de liage entre le premier et le deuxième nœuds (3),
**caractérisé en ce qu'**
au moins un deuxième moyen (10.1) d'entraînement est constitué, de manière à arrêter le disque (7) de maintien de fil avant la finition du deuxième nœud (3) avant que les cordons (4.1, 4.2) d'agent de liage ne passent devant la lame (12) du couteau.
